(19) **Europäisches Patentamt European Patent Office Office européen des brevets**

(11) **EP 1 678 012 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(21) Anmeldenummer: **04765961.0**

(22) Anmeldetag: **14.10.2004**

(51) Int Cl.:
**B60R 21/013** (2006.01)    **B60R 21/0132** (2006.01)

(86) Internationale Anmeldenummer:
**PCT/EP2004/011537**

(87) Internationale Veröffentlichungsnummer:
**WO 2005/037612 (28.04.2005 Gazette 2005/17)**

(54) **VERFAHREN ZUM HERSTELLEN EINES KRAFTFAHRZEUGES**

METHOD FOR THE PRODUCTION OF A MOTOR VEHICLE

PROCEDE DE FABRICATION D'UN VEHICULE

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.10.2003 DE 10348997**
**17.10.2003 DE 10348998**
**17.10.2003 DE 10348999**
**31.01.2004 DE 102004004951**

(43) Veröffentlichungstag der Anmeldung:
**12.07.2006 Patentblatt 2006/28**

(73) Patentinhaber:
• **Volkswagen Aktiengesellschaft**
**38436 Wolfsburg (DE)**
• **AUDI AG**
**85045 Ingolstadt (DE)**

(72) Erfinder:
• **KUHN, Andreas**
**A-5440 Kochl (AT)**
• **NEUBOHN, André**
**38440 Wolfsburg (DE)**
• **WEISS, Christian**
**85113 Böhmfeld (DE)**
• **ALT, Mirko**
**38102 Braunschweig (DE)**

(74) Vertreter: **Geske, Kerstin**
**Volkswagen AG,**
**Patentabteilung EZP,**
**Postfach 1770**
**38436 Wolfsburg (DE)**

(56) Entgegenhaltungen:
DE-A- 10 016 142          DE-A- 10 035 505
DE-A- 10 040 111          DE-A- 19 724 101
DE-A- 19 854 380          DE-C- 10 103 661
US-A- 5 583 771            US-A- 6 070 113

**Beschreibung**

Die Enfindung betrifft ein Verfahren zum Herstellen eines Kraftfahrzeuges, wobei ein erster Auslösezusammenhang zur Erzeugung eines ersten, von einer mittels eines ersten Crashsensors messbaren Bewegungsgröße abhängigen und zur Ansteuerung einer Insassenschutzeinrichtung geeigneten, Zündsignals in Abhängigkeit eines Soll-Zündsignals zur Ansteuerung der Insassenschutzeinrichtung und einer mittels des ersten Crashsensors in einer Situation mit bekanntem Soll-Zündsignal gemessenen Bewegungsgröße generiert wird. Eine derartige Insassenschutzeinrichtung kann einen Airbag und/oder einen Gurtstraffer umfassen bzw. ein Airbag und/oder ein Gurtstraffer sein.

Airbagsysteme sind z.B. in dem unter der Internetseite www.informatik.uni-dortmund.de/airbag/seminarphase/hardware_vortrag.pdf veröffentlichten Artikel "Hardware und Mechanik realer Airbagsteuerungen" offenbart.

Die US 5 583 771, die US 5 684 701 und die US 6 532 508 B1 offenbaren die Ansteuerung eines Airbags mittels eines neuronalen Netzes in Abhängigkeit eines Ausgangssignals eines Beschleunigungssensors.

Die DE 198 54 380 A1, die die Merkmale des Oberbegriffs des Anspruchs 1 zeigt, offenbart ein Verfahren zum Erkennen der Schwere eines Fahrzeugzusammenstosses, bei dem die Ausgangssignale einer Mehrzahl von Beschleunigungssensoren einem neuronalen Netz zugeführt werden. Bei dem Verfahren wird der Beginn der Auswertung der Ausgangssignale der Beschleunigungssensoren durch ein Triggersignal bestimmt, das von einem Beschleunigungssensor ausgegeben wird, wenn sein Ausgangssignal einen vorgegebenen Schwellwert überschreitet. Dieser Beschleunigungssensor veranlasst die anderen Beschleunigungssensoren, zu ein- und demselben Zeitpunkt das jeweilige Ausgangssignal zu liefern. Es wird weiterhin vorgeschlagen, die Ausgangssignale der Beschleunigungssensoren ein- oder zweimal zu integrieren.

Die DE 100 35 505 A1 offenbart ein Verfahren, bei dem mit Hilfe des neuronalen Netzes das Ausgangssignal eines Beschleunigungssensors in seinem zukünftigen zeitlichen Verlauf auf der Basis der Beschleunigungssensorsignale zu mindest einem definierten Zeitpunkt vorhergesagt wird.

Aus der DE 100 40 111 A1 ist ein Verfahren zur Bildung einer Auslöseentscheidung für Rückhaltemittel in einem Fahrzeug bekannt, bei dem aus Beschleunigungsmesswerten die Differenz gebildet und anschließend der Betrag der Differenz integriert wird. Das Integral wird mit mindestens einem Schwellwert verglichen. Überschreitet das Integral diesen Schwellwert bis zu einem vorgegebenen Zeitpunkt nicht, so wird die Lage einer Auslöseschwelle für die gemessene Beschleunigung oder für eine daraus abgeleitete Geschwindigkeitsänderung so verändert, dass die Auslöseempfindlichkeit geringer wird.

In der DE 101 03 661 C1 ist ein Verfahren zur Seitenaufprallsensierung in einem Kraftfahrzeug beschrieben, wobei auf der linken und auf der rechten Fahrzeugseite Beschleunigungssensoren angeordnet sind, aus deren Ausgangssignalen die Differenz gebildet wird. Das Differenzbeschleunigungssignal wird integriert oder aufsummiert. Zur Seitenaufprallsensierung wird das Differenzgeschwindigkeitssignal mit einer Schwelle verglichen, die in Abhängigkeit von dem Differenzbeschleunigungssignal gebildet wird.

Es ist Aufgabe der Erfindung, ein Verfahren zur Erzeugung eines verbesserten Auslösezusammenhanges zum Auslösen einer Insassenschutzeinrichtung eines Kraftfahrzeuges bzw. ein Verfahren zum Herstellen eines verbesserten Kraftfahrzeuges, insbesondere ein Verfahren zum Herstellen eines Kraftfahrzeuges mit einem verbesserten Insassenschutzsystem, anzugeben. Dabei ist es besonders wünschenswert, eine besonders präzise Auslösung eines solchen Insassenschutzsystems bzw. einer solchen Insassenschutzeinrichtung für ein Kraftfahrzeug zu gewährleisten.

Vorgenannte Aufgabe wird durch ein Verfahren zum Herstellen eines Kraftfahrzeuges gelöst, wobei ein erster Auslösezusammenhang zur Erzeugung eines ersten, von einer mittels eines ersten Crashsensors messbaren Bewegungsgröße (des Kraftfahrzeuges) abhängigen und zur Ansteuerung einer Insassenschutzeinrichtung geeigneten, Zündsignals in Abhängigkeit

- eines Soll-Zündsignals zur Ansteuerung der Insassenschutzeinrichtung und
- einer mittels des ersten Crashsensors in einer Situation mit bekanntem Soll-Zündsignal gemessenen Bewegungsgröße

generiert wird, und wobei zumindest ein zweiter Auslösezusammenhang zur Erzeugung eines zweiten, von einer mittels eines zweiten, von dem ersten Crashsensor verschiedenen, Crashsensors messbaren Bewegungsgröße (des Kraftfahrzeuges) abhängigen und zur Ansteuerung der Insassenschutzeinrichtung geeigneten, Zündsignals in Abhängigkeit

- des Soll-Zündsignals und
- einer mittels des zweiten Crashsensors in der oder einer weiteren Situation mit bekanntem Soll-Zündsignal gemessenen Bewegungsgröße

generiert wird.

Ein Crashsensor im Sinne der Erfindung kann ein einzelner Crashsensor sein oder eine Anordnung von mehreren Crashsensoren umfassen. Ein zweiter, von einem ersten Crashsensor im Sinne der Erfindung verschiedener, Crashsensor kann sich von dem ersten Crashsensor in der Einbauposition im Kraftfahrzeug und/oder in seiner Ausführung bzw. seinem Typ von dem ersten Crashsensor unterscheiden. Zusätzlich oder alternativ kann sich ein zweiter, von einem ersten Crashsensor im Sinne der Erfindung verschiedener, Crashsensor in Bezug auf die Anzahl der einzelnen Sensoren unterscheiden. Ein Crashsensor im Sinne der Erfindung kann ein Beschleunigungssensor zum Messen einer Beschleunigung in eine oder mehrere Richtungen sein oder einen oder mehrere solcher Beschleunigungssensor umfassen. Ein Crashsensor im Sinne der Erfindung kann auch ein Radargerät, eine Infrarotanordnung oder eine Kamera sein oder eine oder mehrere solcher Einrichtungen umfassen. In diesem Fall kann eine Bewegungsgröße des Kraftfahrzeuges ein Abstand des Kraftfahrzeuges zu einem Hindernis, die erste oder zweite Ableitung dieses Abstandes oder eine andere äquivalente Größe sein. Ein Crashsensor im Sinne der Erfindung kann auch ein Sensor zur Messung einer Deformation des Kraftfahrzeuges sein oder einen oder mehrere solcher Sensoren umfassen. Ein solcher Sensor kann ein faseroptischer Sensor oder ein in der DE 100 16 142 A1 offenbarter Sensor sein. In diesem Falle kann eine Bewegungsgröße des Kraftfahrzeuges eine Deformation des Kraftfahrzeuges, die erste oder zweite Ableitung dieser Deformation oder eine andere äquivalente Größe sein.

Eine Insassenschutzeinrichtung im Sinne der Erfindung ist insbesondere ein Airbag und/oder ein Gurtstraffer. Eine Bewegungsgröße des Kraftfahrzeuges im Sinne der Erfindung kann eine Beschleunigung, eine Geschwindigkeit oder ein Weg bzw. eine von diesen Größen abgeleitete Größe sein. Eine Situation, für die ein Soll-Zündsignal der Insassenschutzeinrichtung bekannt ist, ist im Sinne der Erfindung insbesondere ein Crashtest.

In vorteilhafter Ausgestaltung der Erfindung wird der erste Crashsensor oder der zweite Crashsensor in Abhängigkeit des ersten Zündsignals, des zweiten Zündsignals und/oder des Soll-Zündsignals zum Einbau in das Kraftfahrzeug ausgewählt. Dabei wird der erste Crashsensor oder der zweite Crashsensor in weiterhin vorteilhafter Ausgestaltung der Erfindung in Abhängigkeit einer Abweichung des ersten Zündsignals von dem Soll-Zündsignal und/oder einer Abweichung des zweiten Zündsignals von dem Soll-Zündsignal zum Einbau in das Kraftfahrzeug ausgewählt.

In weiterhin vorteilhafter Ausgestaltung der Erfindung erfolgt die Auswahl zwischen dem ersten Crashsensor und dem zweiten Crashsensor zum Einbau in das Kraftfahrzeug

- in Abhängigkeit eines mittels des ersten Auslösezusammenhanges in Abhängigkeit einer mittels des ersten Crashsensors gemessenen Bewegungsgröße ermittelten ersten Zündsignals, die nicht zur Generierung des ersten Auslösezusammenhanges verwendet worden ist, und/oder
- in Abhängigkeit eines mittels des zweiten Auslösezusammenhanges in Abhängigkeit einer mittels des zweiten Crashsensors gemessenen Bewegungsgröße ermittelten zweiten Zündsignals, die nicht zur Generierung des zweiten Auslösezusammenhanges verwendet worden ist.

Das heißt insbesondere, dass die Auswahl eines Crashsensors zum Einbau in das Kraftfahrzeug auf der Basis von Daten zumindest eines, von dem Crashtest bzw. den Crashtests verschiedenen, Crashtests erfolgt, der bzw. die zur Generierung eines oder des Auslösezusammenhanges verwendet worden ist bzw. sind.

In weiterhin vorteilhafter Ausgestaltung der Erfindung werden zumindest zwei, insbesondere zumindest zehn, vorteilhafterweise zumindest dreißig, erste Auslösezusammenhänge in Abhängigkeit des Soll-Zündsignals und der mittels des ersten Crashsensors in der Situation mit bekanntem Soll-Zündsignal gemessenen Bewegungsgröße generiert und/oder zumindest zwei, insbesondere zumindest zehn, vorteilhafterweise zumindest dreißig, zweite Auslösezusammenhänge in Abhängigkeit des Soll-Zündsignals und der mittels des zweiten Crashsensors in der Situation mit bekanntem Soll-Zündsignal gemessenen Bewegungsgröße generiert.

In weiterhin vorteilhafter Ausgestaltung der Erfindung werden zumindest hundert erste Auslösezusammenhänge in Abhängigkeit des Soll-Zündsignals und der mittels des ersten Crashsensors in der Situation mit bekanntem Soll-Zündsignal gemessenen Bewegungsgröße generiert und/oder zumindest hundert zweite Auslösezusammenhänge in Abhängigkeit des Soll-Zündsignals und der mittels des zweiten Crashsensors in der Situation mit bekanntem Soll-Zündsignal gemessenen Bewegungsgröße generiert.

In weiterhin vorteilhafter Ausgestaltung der Erfindung werden die Insassenschutzeinrichtung und der ausgewählte Crashsensor in das Kraftfahrzeug eingebaut. Zudem wird der dem ausgewählten Crashsensor zugeordnete Auslösezusammenhang in weiterhin vorteilhafter Ausgestaltung der Erfindung in dem Kraftfahrzeug im plementiert.

In weiterhin vorteilhafter Ausgestaltung wird als Eingangsgröße in den ersten und/oder den zweiten Auslösezusammenhang nicht die gemessene Bewegungsgröße unmittelbar sondern deren zeitlicher Mittelwert über zumindest ein erstes Zeitintervall verwendet. Ein zeitlicher Mittelwert im Sinne der Erfindung kann dabei ein arithmetischer Mittelwert oder ein gewichteter Mittelwert sein. Bei einem derartigen gewichteten Mittelwert können z.B. jüngere Werte der Bewegungsgröße in dem betreffenden Zeitintervall stärker gewichtet werden als ältere Werte der Bewegungsgröße in dem betreffenden Zeitintervall. Ein Mittelwert im Sinne der Erfindung kann auch ein einem Mittelwert proportionaler Wert sein. In vorteilhafter Ausgestaltung der Erfindung ist der Mittelwert ein dem arithmetischen Mittelwert proportionaler Wert. Dabei ist der Mittelwert vorteilhafterweise ein dem Integral der Bewegungsgröße in dem betreffenden Zeitintervall bzw. der Summe von Abtastwerten der Bewegungsgröße in dem betreffenden Zeitintervall proportionaler Wert.

In weiterhin vorteilhafter Ausgestaltung wird als Eingangsgröße in den ersten und/oder den zweiten Auslösezusammenhang nicht die gemessene Bewegungsgröße unmittelbar sondern deren zeitlicher Mittelwert über ein erstes Zeitintervall und deren zeitlicher Mittelwert über zumindest ein zweites, von dem ersten Zeitintervall verschiedenes, Zeitintervall verwendet. Ein zweites, von einem ersten Zeitintervall verschiedenes, Zeitintervall im Sinne der Erfindung kann sich von dem ersten Zeitintervall in seiner Länge und/oder seiner Lage unterscheiden.

In weiterhin vorteilhafter Ausgestaltung der Erfindung ist das erste Zeitintervall und/oder das zweite Zeitintervall zwischen 1 ms und 200 ms, insbesondere zwischen 4 ms und 32 ms, vorteilhafterweise zwischen 8 ms und 24 ms, lang.

In weiterhin vorteilhafter Ausgestaltung der Erfindung sind das erste Zeitintervall und/oder das zweite Zeitintervall zwischen 1 ms und 50 ms, vorteilhafterweise 2 ms und 16 ms, voneinander versetzt.

In weiterhin vorteilhafter Ausgestaltung der Erfindung gibt das Soll-Zündsignal einen Soll-Auslösezeitpunkt der Insassenschutzeinrichtung an. Es ist dabei vorteilhafterweise vorgesehen, dass die gemessene Bewegungsgröße und/oder der zeitliche Mittelwert der gemessenen Bewegungsgröße beim Generieren des ersten Auslösezusammenhanges und/oder des zweiten Auslösezusammenhang in einem Trainingsunterdrückungs-Zeitintervall vor dem Soll-Auslösezeitpunkt, insbesondere einem Mindest-Soll-Auslösezeitpunkt, der Insassenschutzeinrichtung, um den Soll-Auslösezeitpunkt der Insassenschutzeinrichtung herum oder nach dem Soll-Auslösezeitpunkt der Insassenschutzeinrichtung bei der Erzeugung des Auslösezusammenhanges unberücksichtigt bleibt. Dabei ist ein Mindest-Soll-Auslösezeitpunkt ein Auslösezeitpunkt, in dem die Insassenschutzeinrichtung spätestens ausgelöst bzw. gezündet werden soll.

In weiterhin vorteilhafter Ausgestaltung der Erfindung ist das Trainingsunterdrückungs-Zeitintervall zwischen 1 ms und 40 ms, insbesondere zwischen 2 ms und 10 ms, vorteilhafterweise in etwa 5 ms, lang.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen, wobei gleiche Bezugszeichen gleiche oder gleichartige Gegenstände bezeichnen. Dabei zeigen:

Fig. 1     eine Draufsicht auf ein Kraftfahrzeug,
Fig. 2     ein Ausführungsbeispiel für ein Insassenschutzsystem,
Fig. 3     ein Ausführungsbeispiel eines Steuerungsmoduls,
Fig. 4     ein Ausführungsbeispiel eines Auslösemoduls,
Fig. 5     ein Ausführungsbeispiel eines Ausgangssignals eines Crashsensors,
Fig. 6     das Integral des Ausgangssignals gemäß Fig. 5 in einem Zeitintervall,
Fig. 7     ein Ausführungsbeispiel eines neuronalen Netzes,
Fig. 8     ein Ausführungsbeispiel eines Entscheidungsbaumes,
Fig. 9     ein Ausführungsbeispiel eines Verfahrens zum Herstellen eines Kraftfahrzeuges,
Fig. 10    das Integral gemäß Fig. 6 mit einem Trainingsunterdrückungs-Zeitintervall,
Fig. 11    einen Ausschnitt des Integrals gemäß Fig. 10,
Fig. 12    ein Soll-Zündsignal mit einem Trainingsunterdrückungs-Zeitintervall,
Fig. 13    einen Ausschnitt des Integrals gemäß Fig. 6,
Fig. 14    ein weiteres Soll-Zündsignal mit einem Trainingsunterdrückungs-Zeitintervall,
Fig. 15    ein Ausführungsbeispiel eines Auswahlmoduls,
Fig. 16    ein weiteres Ausführungsbeispiel eines Auslösemoduls,
Fig. 17    ein weiteres Ausführungsbeispiel eines Auslösemoduls und
Fig. 18    ein weiteres Ausführungsbeispiel eines Auslösemoduls.

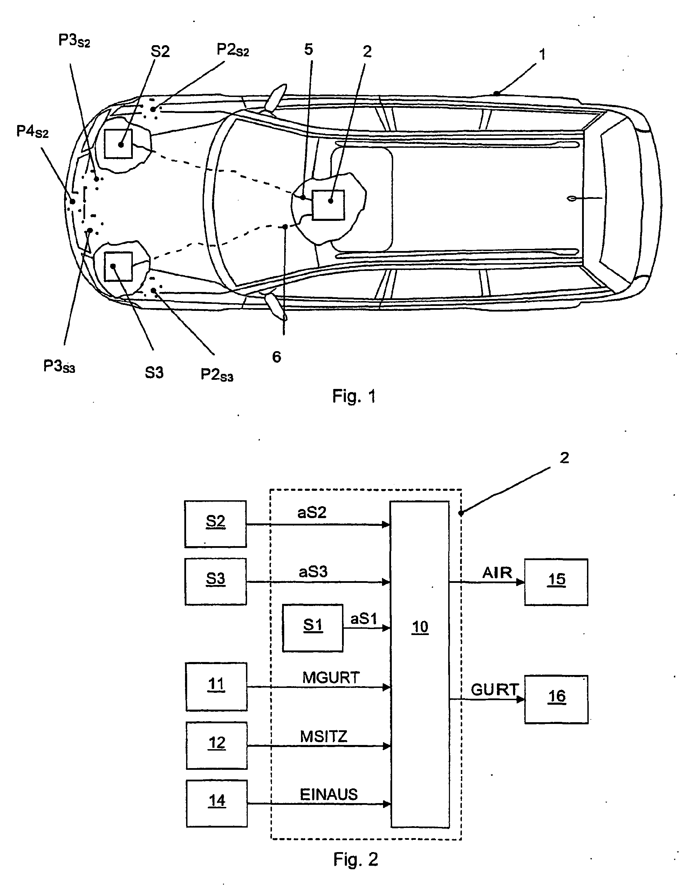

Fig. 1 zeigt eine Draufsicht auf ein Kraftfahrzeug 1 mit einem - in Fig. 2 in Form eines Blockschaltbildes dargestellten - Insassenschutzsystem. Das Insassenschutzsystem umfasst zumindest einen - nicht in Fig. 1 jedoch in Fig. 2 dargestellten - Airbag 15 und/oder einen - nicht in Fig. 1 jedoch in Fig. 2 dargestellten - Gurtstraffer 16. Das Insassenschutzsystem umfasst zudem ein Steuergerät 2 zum Auslösen des Airbags 15 und/oder des Gurtstraffers 16 sowie einen in die rechte vordere Seite des Kraftfahrzeuges 1 integrierten Crashsensor S2 und einen in die linke vordere Seite des Kraftfahrzeuges 1 integrierten Crashsensor S3. Die Crashsensoren S2 und S3 sind mit dem Steuergerät 2 durch Zuleitungen 5 und 6 verbunden.

Die Crashsensoren S2 und S3 sowie ein weiterer - wie in Fig. 2 dargestellt in das Steuergerät 2 integrierter - Crashsensor S1 sind gemäß dem vorliegenden Ausführungsbeispiel als Beschleunigungssensoren ausgebildet. Geeignete Beschleunigungssensoren sind z.B. in dem unter der Internetseite
www.informatik.uni-dortmund.de/airbag/seminarphase/hardware_vortrag.pdf
veröffentlichten Artikel "Hardware und Mechanik realer Airbagsteuerungen", Kapitel 3.2 'Beschleunigungssensor' offenbart. Geeignete Beschleunigungssensoren sind z.B. Bosch SMB060, Bosch PAS3 oder Bosch UPF1. Ein geeigneter Beschleunigungssensor kann z.B. einen Bessel-Tiefpassfilter mit einer Grenzfrequenz von z.B. 400 Hz umfassen. Die Crashsensoren S1, S2 und S3 liefern als Ausgangssignale Beschleunigungswerte aS1, aS2 bzw. aS3.

Die Position des Crashsensors S2 im Kraftfahrzeug 1 wird im folgenden mit $P1_{S2}$ bezeichnet. Mit $P2_{S2}$, $P3_{S2}$ und $P4_{S2}$ sind in Fig. 1 alternative Positionen des Crashsensors S2 im Kraftfahrzeug 1 oder zusätzliche Positionen für zusätzliche Crashsensoren bezeichnet. Die Position des Crashsensors S3 im Kraftfahrzeug 1 wird im folgenden mit $P1_{53}$ bezeichnet. Mit $P2_{S3}$ und $P3_{S3}$ sind in Fig. 1 alternative Positionen des Crashsensors S3 im Kraftfahrzeug 1 oder zusätzliche Positionen für zusätzliche Crashsensoren bezeichnet.

Das in Fig. 2 dargestellte Insassenschutzsystem umfasst zudem einen Gurtsensor 11 zum Erkennen, ob ein Sicherheitsgut angelegt ist, und zur Ausgabe einer entsprechenden Gurtinformation MGURT. Das Insassenschutzsystem umfasst weiterhin einen Sitzbelegungssensor 12 zum Erkennen, ob bzw. wie ein Sitz belegt ist, und zur Ausgabe einer entsprechenden Sitzbelegungsinformation MSITZ. Ein geeigneter Sitzbelegungssensor ist z.B. ein in den Sitz integrierter Drucksensor. Geeignet ist auch eine in dem unter der Internetseite www.informatik.uni-dortmund.de/airbag/ seminarphase/hardware_vortrag.pdf veröffentlichten Artikel "Hardware und Mechanik realer Airbagsteuerungen", Kapitel 3.3 'Innenraum Sensierung' offenbarte Infrarotabtastung. Mittels Infrarotabtastung und Fuzzy Logic lässt sich dabei nicht nur erkennen, ob ein Sitz belegt ist, sondern auch, ob es sich dabei um einen Gegenstand wie eine Tasche handelt oder um einen Menschen. Dazu sendet eine Zeile von z.B. acht oder mehr Leuchtdioden oberhalb des Sitzes Infrarotlicht aus und eine CCD-Matrix aus 64 Bildpunkten nimmt die so beleuchtete Szene auf. Diese charged coupled devices, kurz CCD, bestehen aus Photodioden und Verstärkerelementen in Matrixanordnungen. Einfallendes Licht setzt dabei jeweils Ladungsträger frei. Ein so erzeugtes Signal wird verstärkt und verarbeitet beziehungsweise gespeichert. Dieser Vorgang wird unter verschiedenen Winkeln wiederholt und so der Sitz abgetastet. Algorithmen der Bildverarbeitung und der Fuzzy Logic erkennen aus diesen Signalen Konturen von Objekten und Menschen.

Es kann weiterhin vorgesehen sein, dass das Insassenschutzsystem ein Bedienelement 14 zur Aktivierung bzw. Deaktivierung des Airbags 15 umfasst. Ein entsprechendes Schaltsignal ist mit Bezugszeichen EINAUS bezeichnet.

Das Steuergerät 2 umfasst ein Steuerungsmodul 10 zur Berechnung und Ausgabe eines Zündsignals AIR für den Airbag 15 und/oder eines Zündsignals GURT für den Gurtstraffer 16 in Abhängigkeit der Beschleunigungswerte aS1, aS2 bzw. aS3, der Gurtinformation MGURT, der Sitzbelegungsinformation MSITZ und/oder des Schaltsignals EINAUS.

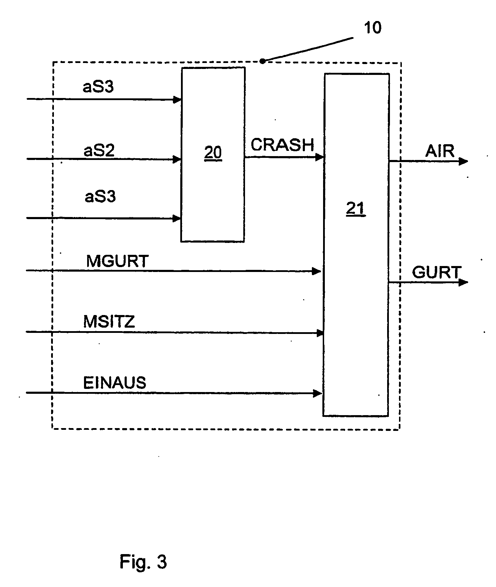

Fig. 3 zeigt das Steuerungsmodul 10 in einer beispielhaften Ausgestaltung. Das Steuerungsmodul 10 umfasst ein Auslösemodul 20 zur Berechnung und Ausgabe eines Zündvorschlags CRASH in Abhängigkeit der Beschleunigungswerte aS1, aS2 bzw. aS3. Das Steuerungsmodul 10 umfasst zudem eine Feuertabelle 21 zur Berechnung und Ausgabe des Zündsignals AIR für den Airbag 15 und/oder des Zündsignals GURT für den Gurtstraffer 16 in Abhängigkeit des Zündvorschlags CRASH, der Gurtinformation MGURT, der Sitzbelegungsinformation MSITZ und/oder des Schaltsignals EINAUS. So kann z.B. vorgesehen werden, dass das Zündsignal AIR nur dann gleich dem Zündvorschlag CRASH ist, wenn ein entsprechender Sitz mit einer Person einer gewissen Größe belegt ist, und dass das Zündsignal AIR andernfalls gleich 0 ist.

Sowohl der Zündvorschlag CRASH als auch die Zündsignale AIR und GURT können Zündsignale im Sinne der Ansprüche sein. Sowohl der Zündvorschlag CRASH als auch die Zündsignale AIR und GURT bzw. Zündsignale im Sinne der Erfindung können ein - z.B. dem in der DE 100 35 505 A1 beschriebenen "FIRE/NO-FIRE"-Signal entsprechendes - binäres Signal sein, das angibt, ob eine Insassenschutzeinrichtung, wie ein Airbag und/oder ein Gurtstraffer, ausgelöst werden soll. Sowohl der Zündvorschlag CRASH als auch die Zündsignale AIR und GURT bzw. Zündsignale im Sinne der Erfindung können auch ein komplexes Signal sein. Sowohl der Zündvorschlag CRASH als auch das Zündsignal AIR bzw. Zündsignale im Sinne der Erfindung können z.B. ein komplexes Signal sein, das angibt, in welchem Ausmaß (z.B. Stufe 1 oder Stufe 2) der Airbag 15 gezündet werden soll. Sowohl der Zündvorschlag CRASH als auch das Zündsignal AIR bzw. Zündsignale im Sinne der Erfindung können z.B. zudem einen in der DE 100 35 505 A1 beschriebenen Crashschwereparameter bzw. eine Insassenbeschleunigung bzw. -belastung umfassen. Es kann vorgesehen sein, dass sowohl der Zündvorschlag CRASH als auch die Zündsignale AIR und GURT bzw. Zündsignale im Sinne der Erfindung den Ort und/oder die Richtung eines Zusammenstoßes angeben können.

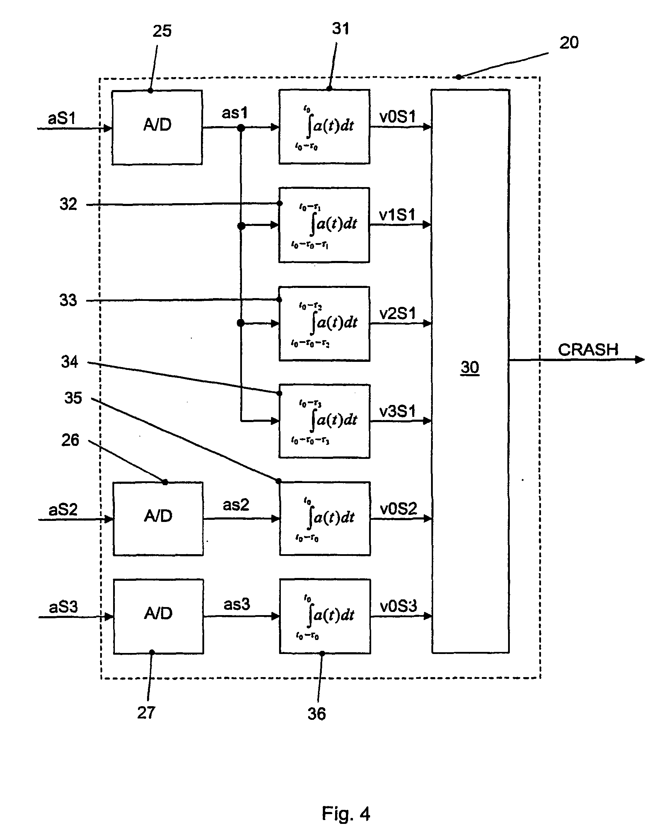

Fig. 4 zeigt das Auslösemodul 20 in einer beispielhaften Ausgestaltung. Das Auslösemodul 20 umfasst einen A/D-Wandler 25 (analog/digtal-Wandler) zum Abtasten des Beschleunigungswertes aS1 und zur Ausgabe eines abgetasteten Beschleunigungswertes as1, einen A/D-Wandler 26 zum Abtasten des Beschleunigungswertes aS2 und zur Ausgabe eines abgetasteten Beschleunigungswertes as2 und einen A/D-Wandler 27 zum Abtasten des Beschleunigungswertes aS3 und zur Ausgabe eines abgetasteten Beschleunigungswertes as3. Die Abtastfrequenz der $\Delta t$ der A/D-Wandler 25, 26 und 27 kann z.B. 4 kHz betragen. Das Auslösemodul 20 umfasst zudem (digitale) Integratoren 31, 32, 33, 34, 35 und 36.

Mittels des Integrators 31 wird ein Pseudogeschwindigkeitswert v0S1 zu einem Zeitpunkt $t_0$ gemäß

$$v0S1 = \int_{t_0-\tau_0}^{t_0} as1 \cdot dt$$

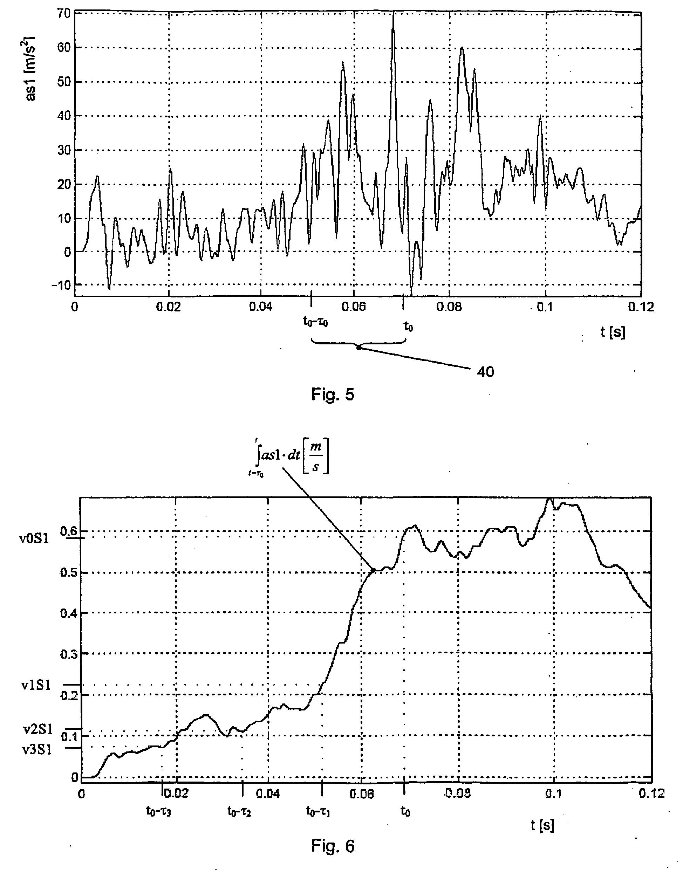

ermittelt, wobei $\tau_0$ die Länge eines Zeitintervalls $[t_0-\tau_0, t_0]$ bzw. 40 (vgl. Fig. 5) ist. Der Zeitpunkt $t_0$ bezeichnet den aktuellen Zeitpunkt, also den aktuellen Wert der Zeit t.

Mittels des Integrators 32 wird ein Pseudogeschwindigkeitswert v1S1 zu einem Zeitpunkt $t_0-\tau_1$ gemäß

$$v1S1 = \int_{t_0-\tau_0-\tau_1}^{t_0-\tau_1} as1 \cdot dt$$

ermittelt.

Mittels des Integrators 33 wird ein Pseudogeschwindigkeitswert v2S1 zu einem Zeitpunkt $t_0-\tau_2$ gemäß

$$v2S1 = \int_{t_0-\tau_0-\tau_2}^{t_0-\tau_2} as1 \cdot dt$$

ermittelt.

Mittels des Integrators 34 wird ein Pseudogeschwindigkeitswert v3S1 zu einem Zeitpunkt $t_0-\tau_3$ gemäß

$$v3S1 = \int_{t_0-\tau_0-\tau_3}^{t_0-\tau_3} as1 \cdot dt$$

ermittelt.

Mittels des Integrators 35 wird ein Pseudogeschwindigkeitswert v0S2 zum Zeitpunkt $t_0$ gemäß

$$v0S2 = \int_{t_0-\tau_0}^{t_0} as2 \cdot dt$$

ermittelt.

Mittels des Integrators 36 wird ein Pseudogeschwindigkeitswert v0S3 zum Zeitpunkt $t_0$ gemäß

$$v0S3 = \int_{t_0-\tau_0}^{t_0} as3 \cdot dt$$

ermittelt.

Die Wirkung der Integratoren 31, 32, 33, 34, 35 und 36 verdeutlichen Fig. 5 und Fig. 6. Dabei zeigt Fig. 5 einen beispielhaften Verlauf des (abgetasteten) Beschleunigungswertes as1 über die Zeit t bei einem Frontalzusammenstoß des Kraftfahrzeuges 1 mit einem Hindernis. Fig. 6 zeigt einen beispielhaften Verlauf des Pseudogeschwindigkeitswertes v0S1 für $\tau_0$ = 24ms.

In der in Fig. 6 dargestellten beispielhaften Ausgestaltung beträgt $\tau_1$ 17 ms, $\tau_2$ 34 ms und $\tau_3$ 51 ms. In einer vorteilhaften Ausgestaltung kann $\tau_1$ 8 ms, $\tau_2$ 16 ms und $\tau_3$ 24 ms betragen.

Die Pseudogeschwindigkeitswerte v0S1, v1S1, v2S1, v3S1, v0S2 und v0S3 sind Beispiele für zeitliche Mittelwerte im Sinne der Erfindung.

## Tabelle 1

```
/* Evaluation function */
int evaluate_Action(double *x)
{
        int CRASH;

        if (vOS3 < δvOS3 ) {
            if (vOS2 < δvOS2 ) {
                if (v2S1 < δv2S1 ) {
                    if (vOS1 < δvOS1 ) {
                        CRASH = 0;
                    } else {
                        if (vOS3 < δvOS3,2 ) {
                            CRASH = 0;
                        } else {
                            if (vOS1 < δvOS1,2 ) {
                                if (v1S1 < δv1S1 ) {
                                    CRASH = 1;
                                } else {
                                    CRASH = 0;
                                }
                            } else {
                                CRASH = 1;
                            }
                        }
                    }
                } else {
                    if (vOS2 < δvOS2,2 ) {
                        CRASH = 0;
                    } else {
                        if (vOS3 < δvOS3,3 ) {
                            CRASH = 0;
                        } else {
                            CRASH = 1;
                        }
                    }
                }
            } else {
                CRASH = 1;
            }
        } else {
            CRASH = 1;
        }
        return (CRASH);
}
```

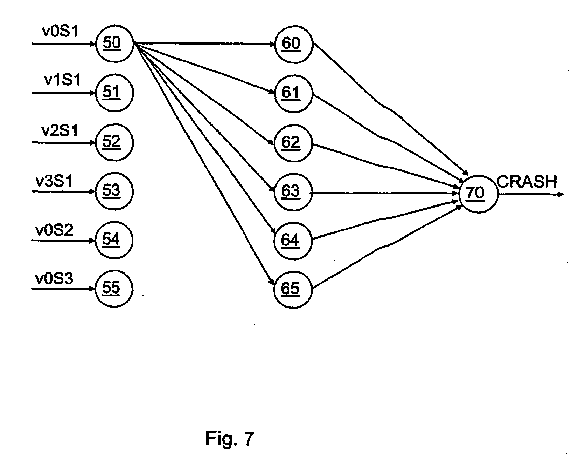

Das Auslösemodul 20 umfasst weiterhin einen Auslösezusammenhang 30 zur Erzeugung des Zündvorschlags CRASH. Der Auslösezusammenhang 30 kann z.B. als neuronales Netz ausgebildet sein, wie es in Fig. 7 in beispielhafter Ausgestaltung dargestellt ist. Das in Fig. 7 dargestellte neuronale Netz umfasst sechs Eingangsknoten 50, 51, 52, 53, 54, 55, sechs verdeckte Knoten 60, 61, 62, 63, 64, 65 und einen Ausgangsknoten 70, wobei jeder Eingangsknoten 50, 51, 52, 53, 54, 55 mit jedem verdeckten Knoten 60, 61, 62, 63, 64, 65 und jeder verdeckte Knoten 60, 61, 62, 63, 64, 65 mit dem Ausgangsknoten 70 verbunden ist. In Fig. 7 sind jedoch aus Gründen der Übersichtlichkeit nicht alle Verbindungen zwischen den Eingangsknoten 50, 51, 52, 53, 54, 55 und den verdeckten Knoten 60, 61, 62, 63, 64, 65 dargestellt.

Eingangsgröße in den Eingangsknoten 50 ist der Pseudogeschwindigkeitswert v0S1, Eingangsgröße in den Eingangsknoten 51 ist der Pseudogeschwindigkeitswert v1 S1, Eingangsgröße in den Eingangsknoten 52 ist der Pseudogeschwindigkeitswert v2S1, Eingangsgröße in den Eingangsknoten 53 ist der Pseudogeschwindigkeitswert v3S1, Eingangsgröße in den Eingangsknoten 54 ist der Pseudogeschwindigkeitswert v0S2, und Eingangsgröße in den Eingangsknoten 55 ist der Pseudogeschwindigkeitswert v0S3. Ausgangsgröße aus dem Ausgangskoten 70 ist der Zündvorschlag CRASH.

Einzelheiten zu neuronalen Netzen können der US 5 583 771, der US 5 684 701 sowie den in der US 5 684 701 zitierten Dokumenten "Techniques And Application Of Neural Networks", Taylor, M. und Lisboa, Ellis Horwood, West Sussex, England, 1993, "Naturally Intelligent Systems", Caudill, M. und Butler, G., MIT Press, Cambridge, 1990 und "Digital Neural Networks", Kung, S. Y., PTR Prentice Hall, Eaglewood Cliffs, NJ., 1993 entnommen werden.

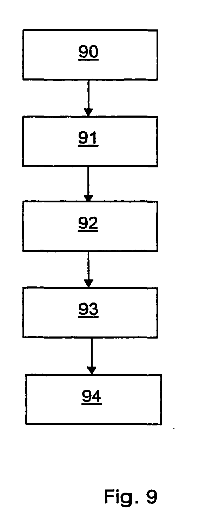

Der Auslösezusammenhang 30 kann alternativ z.B. auch als Abfolge von Vergleichen mit Grenzwerten ausgestaltet werden. Tabelle 1 zeigt eine solche Abfolge von Vergleichen mit Grenzwerten, wobei der in Tabelle 1 dargestellte Code durch ein unter Bezugnahme auf Fig. 9 erläutertes Verfahren automatisch erzeugt worden ist. Für den in Tabelle 1 dargestellte Code beträgt $\tau_1$ 4 ms, $\tau_2$ 8 ms und $\tau_0$ 24 ms.

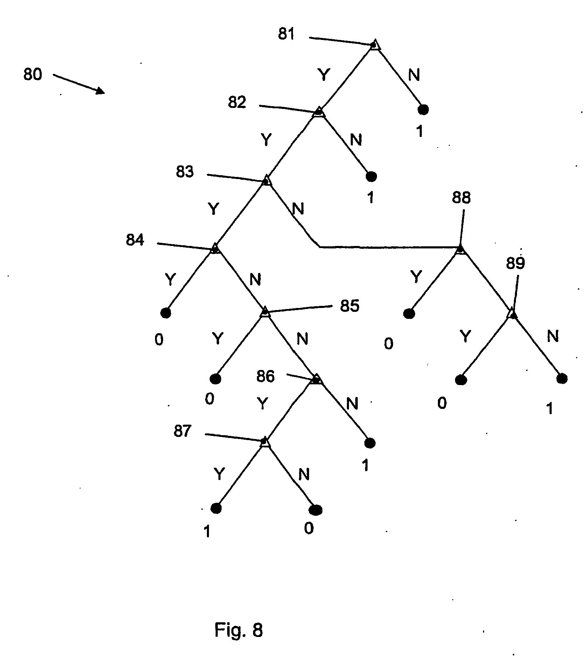

Fig. 8 zeigt den Code gemäß Tabelle 1 in einer Darstellung als Entscheidungsbaum 80. Dabei bezeichnet Bezugszeichen 81 die Abfrage, ob v0S3 kleiner ist als ein Grenzwert $\delta_{v0S3}$. Bezugszeichen 82 bezeichnet die Abfrage, ob v0S2 kleiner ist als ein Grenzwert $\delta_{v0S2}$. Bezugszeichen 83 bezeichnet die Abfrage, ob v2S1 kleiner ist als ein Grenzwert $\delta_{v2S1}$. Bezugszeichen 84 bezeichnet die Abfrage, ob v0S1 kleiner ist als ein Grenzwert $\delta_{v0S1}$.

Bezugszeichen 85 bezeichnet die Abfrage, ob v0S3 kleiner ist als ein Grenzwert $\delta_{v0S3,2}$. Bezugszeichen 86 bezeichnet die Abfrage, ob v0S1 kleiner ist als ein Grenzwert $\delta_{v0S1,2}$. Bezugszeichen 87 bezeichnet die Abfrage, ob v1S1 kleiner ist als ein Grenzwert $\delta_{v1S1}$. Bezugszeichen 88 bezeichnet die Abfrage, ob v0S2 kleiner ist als ein Grenzwert $\delta_{v0S2,2}$. Bezugszeichen 89 bezeichnet die Abfrage, ob v0S3 kleiner ist als ein Grenzwert $\delta_{v0S3,3}$.

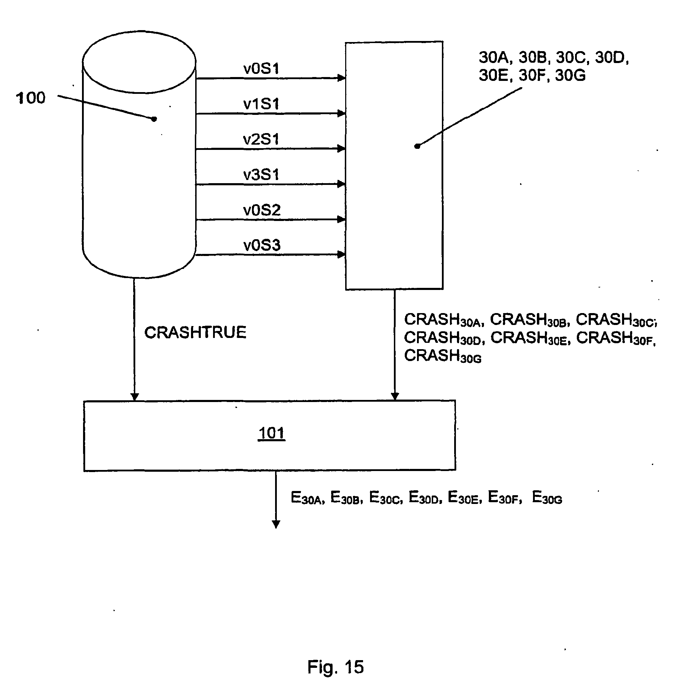

Fig. 9 zeigt ein Verfahren zum Herstellen des Kraftfahrzeuges 1. Dazu wird zunächst in einem Schritt 90 ein Test-Prototyp des Kraftfahrzeuges 1 erstellt, in den den Crashsensoren S1, S2, S3 entsprechende Crashsensoren zum Messen der Bewegungsgröße des Kraftfahrzeuges 1 eingebaut werden. Der Test-Prototyp des Kraftfahrzeuges 1 wird einem Crashtest unterzogen, wobei die Ausgangssignale der den Crashsensoren S1, S2, S3 entsprechenden Crashsensoren gemessen werden. Aus diesen Ausgangssignalen bzw. den Ausgangssignalen weiterer Crashtests wird eine in Fig. 15 mit Bezugszeichen 100 und in Tabelle 2 in der Spalte 'Datensatz' beispielhaft dargestellte Datenbasis aufgebaut. In dieser Datenbasis sind Datensätze D1 bis D20 aus den vorgenannten Ausgangssignalen der den Crashsensoren S1, S2, S3 entsprechenden Crashsensoren gemäß einem in Fig. 4, Fig. 16, Fig. 17 bzw. Fig. 18 beschriebenen Verfahren erzeugte Pseudogeschwindigkeitswerte v0S1, v1S1, v2S1, v3S1, v0S2, v0S3 zusammen mit einem Soll-Zündsignal CRASHTRUE abgespeichert, das einen Soll-Zündzeitpunkt bzw. einen Soll-Auslösezeitpunkt angibt. Das Soll-Zündsignal CRASHTRUE kann z.B. einen Soll-Zündzeitpunkt des Airbags 15 angeben.

Tabelle 2 zeigt dabei mit welchem an welcher Position angeordneten Crashsensor-Typ die Bewegungsgröße bzw. die Bewegungsgrößen, aus der bzw. aus denen die Pseudogeschwindigkeitswerte v0S1, v1S1, v2S1, v3S1, v0S2, v0S3 eines Datensatzes erzeugt worden sind, gemessen wurde bzw. gemessen wurden. Dabei kann Crashsensor-Typ A z.B. ein Bosch SMB060 Beschleunigungssensor, Crashsensor-Typ B z.B. ein Bosch Bosch PAS3 Beschleunigungssensor und Crashsensor-Typ C z.B. ein Bosch UPF1 Beschleunigungssensor sein.

Es ist vorteilhaftenrveise vorgesehen, mit einem Crashtest mehr als einen Datensatz zu erzeugen. So sind die in Tabelle 2 dargestellten Datensätze D1 bis D20 z.B. durch insgesamt sechs Crashtests erzeugt worden. Dabei ordnet die Spalte 'Crashtest' in Tabelle 2 die Datensätze D1 bis D20 den einzelnen Crashtests zu.

| Tabelle 2 | | | |
|---|---|---|---|
| Datensatz | Crashtest | Position | Crashsensor-Typ |
| D1 | #1 | P1$_{S2}$, P1$_{S3}$ | A |
| D2 | #2 | P1$_{S2}$, P1$_{S3}$ | A |
| D3 | #3 | P1$_{S2}$, P1$_{S3}$ | B |
| D4 | #4 | P1$_{S2}$, P1$_{S3}$ | B |
| D5 | #4 | P1$_{S2}$, P1$_{S3}$ | B |
| D6 | #5 | P1$_{S2}$, P1$_{S3}$ | C |
| D7 | #6 | P1$_{S2}$, P1$_{S3}$ | C |
| D8 | #3 | P2$_{S2}$, P2$_{S3}$ | A |
| D9 | #3 | P2$_{S2}$, P2$_{S3}$ | A |

(fortgesetzt)

| Tabelle 2 | | | |
|---|---|---|---|
| Datensatz | Crashtest | Position | Crashsensor-Typ |
| D10 | #3 | $P2_{S2}$, $P2_{S3}$ | A |
| D11 | #4 | $P2_{S2}$, $P2_{S3}$ | A |
| D12 | #1 | $P2_{S2}$, $P2_{S3}$ | C |
| D13 | #1 | $P2_{S2}$, $P2_{S3}$ | C |
| D14 | #2 | $P2_{S2}$, $P2_{S3}$ | C |
| D15 | #1 | $P3_{S2}$, $P3_{S3}$ | A |
| D16 | #1 | $P3_{S2}$, $P3_{S3}$ | A |
| D17 | #2 | $P3_{S2}$, $P3_{S3}$ | A |
| D18 | #1 | $P4_{S2}$ | B |
| D19 | #1 | $P4_{S2}$ | B |
| D20 | #2 | $P4_{S2}$ | B |

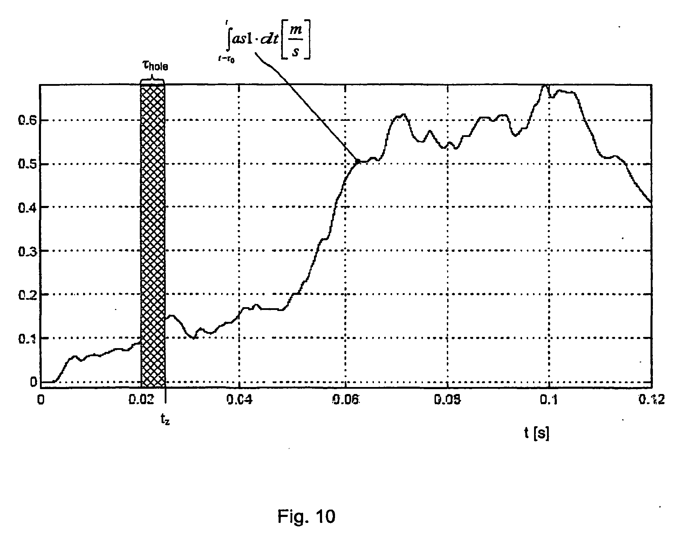

Dem Schritt 90 folgt ein Schritt 91, in dem als Auslösezusammenhang 30 verwendbare Auslösezusammenhänge auf der Grundlage der in der Datenbasis abgespeicherten Datensätze D1 bis D20 erzeugt werden. Dabei ist in beispielhafter Ausgestaltung vorgesehen, dass mittels des Datensatzes D1 ein Auslösezusammenhang 30A, mittels des Datensatzes D3 ein Auslösezusammenhang 30B, mittels des Datensatzes D6 ein Auslösezusammenhang 30C, mittels der Datensätze D8, D9 und D10 ein Auslösezusammenhang 30D, mittels der Datensätze D12 und D13 ein Auslösezusammenhang 30E, mittels der Datensätze D15 und D16 ein Auslösezusammenhang 30F und mittels der Datensätze D18 und D19 ein Auslösezusammenhang 30G zur Verwendung als Auslösezusammenhang 30 generiert wird. Dabei bleiben jedoch in vorteilhafter Ausgestaltung die Pseudogeschwindigkeitswerte v0S1, v1S1, v2S1, v3S1, v0S2, v0S3 in einem Trainingsunterdrückungs-Zeitintervall um den Soll-Auslösezeitpunkt des Airbags 15 bzw. des Gurtstraffers 16 herum, in einem Trainingsunterdrückungs-Zeitintervall nach dem Soll-Auslösezeitpunkt des Airbags 15 bzw. des Gurtstraffers 16 oder vorteilhafterweise - wie im folgenden unter Bezugnahme auf Fig. 10, Fig. 11, Fig. 12, Fig. 13 und Fig. 14 erläutert - in einem Trainingsunterdrückungs-Zeitintervall vor dem Soll-Auslösezeitpunkt des Airbags 15 bzw. des Gurtstraffers 16 bei der Erzeugung der Auslösezusammenhänge 30A, 30B, 30C, 30D, 30E, 30F und 30G unberücksichtigt.

Fig. 10 zeigt den Pseudogeschwindigkeitswert gemäß Fig. 6 mit einem entsprechenden Trainingsunterdrückungs-Zeitintervall $\tau_{hole}$, das vor einem mit $t_z$ bezeichneten Soll-Auslösezeitpunkt des Airbags 15 bzw. des Gurtstraffers 16 liegt. Der Soll-Auslösezeitpunkt $t_z$ ist dabei vorteilhafterweise der Zeitpunkt, bis zu dem der Airbag 15 bzw. der Gurtstraffer 16 spätestens ausgelöst werden soll. Das Trainingsunterdrückungs-Zeitintervall $\tau_{hole}$ ist zwischen 1 ms und 40 ms, insbesondere zwischen 2 ms und 10 ms, vorteilhafterweise in etwa 5 ms, lang. In dem vorliegenden Ausführungsbeispiel beträgt das Trainingsunterdrückungs-Zeitintervall $\tau_{hole}$ 5 ms.

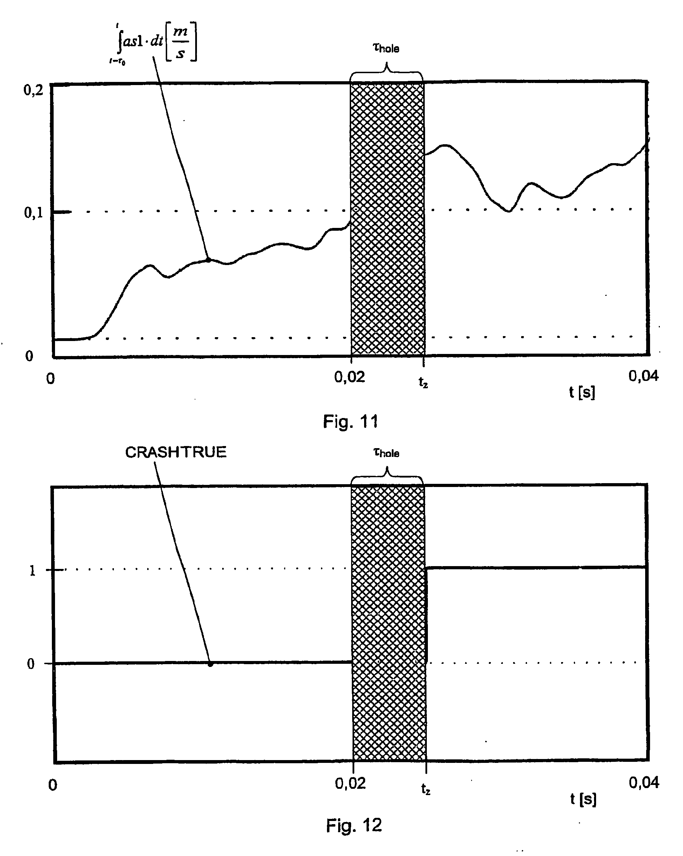

Fig. 11 zeigt einen Ausschnitt aus Fig. 10 für den Bereich zwischen 0 ms und 40 ms. Fig. 12 zeigt das zugeordnete Soll-Zündsignal CRASHTRUE. Das Soll-Zündsignal CRASHTRUE ist vor dem Soll-Auslösezeitpunkt $t_z$ gleich 0 und nach dem Soll-Auslösezeitpunkt $t_z$ gleich 1, bleibt jedoch ebenso wie der Pseudogeschwindigkeitswert gemäß Fig. 11 in dem Trainingsunterdrückungs-Zeitintervall $\tau_{hole}$ vor dem Soll-Auslösezeitpunkt $t_z$ für die Erzeugung der Auslösezusammenhänge 30A, 30B, 30C, 30D, 30E, 30F und 30G unberücksichtigt. Dies kann z.B. dadurch erfolgen, dass die Pseudogeschwindigkeitswerte und das Soll-Zündsignal CRASHTRUE in dem Trainingsunterdrückungs-Zeitintervall $\tau_{hole}$ aus den Daten entfernt werden.

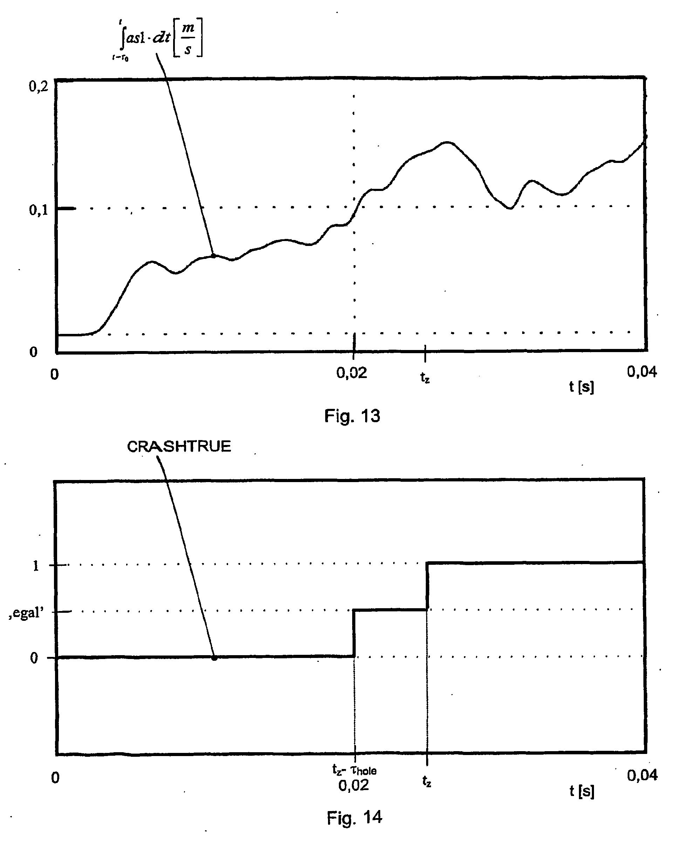

Fig. 13 und Fig. 14 zeigen ein dazu alternatives Vorgehen, das ebenfalls Pseudogeschwindigkeitswerte und das Soll-Zündsignal CRASHTRUE in dem Trainingsunterdrückungs-Zeitintervall $\tau_{hole}$ bei der Erzeugung der Auslösezusammenhänge 30A, 30B, 30C, 30D, 30E, 30F und 30G unberücksichtigt lässt. Dabei werden die Pseudogeschwindigkeitswerte zwar auch in dem Trainingsunterdrückungs-Zeitintervall $\tau_{hole}$ vor dem Soll-Auslösezeitpunkt $t_z$ für die Erzeugung der Auslösezusammenhänge 30A, 30B, 30C, 30D, 30E, 30F und 30G verwendet, das Soll-Zündsignal CRASHTRUE wird jedoch in dem Trainingsunterdrückungs-Zeitintervall $\tau_{hole}$ vor dem Soll-Auslösezeitpunkt $t_z$ um eine Variable 'egal' ergänzt, die angibt, dass sowohl eine während eines Trainings von Auslösezusammenhängen 30A, 30B, 30C, 30D, 30E, 30F und 30G ausgegebene 0 als auch eine ausgegebene 1 für den Zündvorschlag CRASH richtig ist. Das heißt, egal ob die Auslösezusammenhänge 30A, 30B, 30C, 30D, 30E, 30F und 30G während des Trainings bzw.

Lernens innerhalb des Trainingsunterdrückungs-Zeitintervalls $\tau_{hole}$ als Zündvorschlag CRASH 0 oder 1 ausgeben, wird angenommen, dass die Lösung, also der Zündvorschlag CRASH, gleich dem Soll-Zündsignal CRASHTRUE ist.

In alternativer Ausgestaltung kann das Soll-Zündsignal bei der Erzeugung der Auslösezusammenhänge 30A, 30B, 30C, 30D, 30E, 30F und 30G in einem Sondertrainings-Zeitintervall vor dem Soll-Auslösezeitpunkt der Insassenschutzeinrichtung, um den Soll-Auslösezeitpunkt der Insassenschutzeinrichtung herum oder nach dem Soll-Auslösezeitpunkt der Insassenschutzeinrichtung durch einen Sondertrainings-Wert ersetzt werden. Der Sondertrainings-Wert liegt dabei vorteilhafterweise zwischen einem Wert des Soll-Zündsignals vor dem Soll-Auslösezeitpunkt und einem Wert des Soll-Zündsignals nach dem Soll-Auslösezeitpunkt. Der Sondertrainings-Wert ist dabei vorteilhafterweise zeitvariant.

Mittels der gemäß dem unter Bezugnahme auf Fig. 11, Fig. 12, Fig. 13 und Fig. 14 beschriebenen Vorgehen veränderten Daten der Datenbasis 100 werden die Auslösezusammenhänge 30A, 30B, 30C, 30D, 30E, 30F und 30G anschließend automatisch mit dem Ziel erzeugt, dass für die verwendeten Daten der Zündvorschlag CRASH gleich dem Soll-Zündsignal CRASHTRUE ist. Zur automatischen Erzeugung der Auslösezusammenhänge 30A, 30B, 30C, 30D, 30E, 30F und 30G in einer Ausgestaltung als in Fig. 7 dargestelltes neuronales Netz können dafür herkömmliche Tools zur Erzeugung neuronaler Netze wie die "Neural Network Toolbox" des Programms "MATLAB 7" von Mathworks verwendet werden.

Zur automatischen Erzeugung der Auslösezusammenhänge 30A, 30B, 30C, 30D, 30E, 30F und 30G in einer Ausgestaltung als in Tabelle 1 dargestellte Abfolge von Vergleichen bzw. als in Fig. 8 dargestellten Entscheidungsbaum 80 kann z.B. die Routine "treefit" aus der "Statistics Toolbox" des Programms "MATLAB 7" von Mathworks verwendet werden. Dieses Programm kann unter der Internetadresse www.mathworks.com/companylaboutus/contact_us/contact_ sales.html erworben werden. Einzelheiten zur Routine "treefit" sind unter der Internetadresse www.mathworks.com/ access/helpdesk/help/toolbox/stats/treefit.html offenbart.

Der Auslösezusammenhang gemäß Fig. 8 bzw. Tabelle 1 lässt den Pseudogeschwindigkeitswert v3S1 unberücksichtigt. Dieser ist im Lernverfahren berücksichtigt, jedoch bei der Erzeugung des Codes gemäß Tabelle 1 verworfen worden.

Dem Schritt 91 folgt ein Schritt 92, in dem den Auslösezusammenhängen 30A, 30B, 30C, 30D, 30E, 30F und 30G mittels eines in Fig. 15 dargestellten Bewerters 101 je eine Abweichungszahl E zugeordnet wird. Dabei wird im folgenden die dem Auslösezusammenhang 30A zugeordnete Abweichungszahl E mit $E_{30A}$, die dem Auslösezusammenhang 30B zugeordnete Abweichungszahl E mit $E_{30B}$, die dem Auslösezusammenhang 30C zugeordnete Abweichungszahl E mit $E_{30C}$, die dem Auslösezusammenhang 30D zugeordnete Abweichungszahl E mit $E_{30D}$, die dem Auslösezusammenhang 30E zugeordnete Abweichungszahl E mit $E_{30E}$, die dem Auslösezusammenhang 30F zugeordnete Abweichungszahl E mit $E_{30F}$ und die dem Auslösezusammenhang 30G zugeordnete Abweichungszahl E mit $E_{30G}$, bezeichnet.

Mittels des Bewerters 101 wird die Abweichungszahl E z.B. gemäß

$$E = \frac{1}{i2 - i1} \sum_{i=i1}^{i2} \left| CRASHTRUE - CRASH \right|$$

oder gemäß

$$E = \frac{1}{i2 - i1} \sum_{i=i1}^{i2} \left( CRASHTRUE - CRASH \right)^2$$

erzeugt, wobei [i1,i2] ein Intervall in Form von Indizes angibt, in dem die Bewertung erfolgt. Da kann z.B. i1 gleich 0 und i2 gleich dem höchsten Index eines Datensatzes sein. Vorteilhafterweise ist der Wert i2-i1 für alle Abweichungszahlen $E_{30A}$, $E_{30B}$, $E_{30C}$, $E_{30D}$, $E_{30E}$, $E_{30F}$ und $E_{30G}$ gleich groß.

In besonders vorteilhafter Ausgestaltung werden zumindest zwei, insbesondere zumindest zehn, vorteilhafterweise zumindest dreißig Varianten der Auslösezusammenhänge 30A, 30B, 30C, 30D, 30E, 30F und 30G generiert und zur Auswahl der Crashsensoren bzw. des Auslösezusammenhanges verwendet. Dabei kann vorgesehen sein, mehr als hundert Varianten der Auslösezusammenhänge 30A, 30B, 30C, 30D, 30E, 30F und 30G zu generieren.

Vorgenanntes Verfahren ist besonders vorteilhaft in Verbindung mit neuronalen Netzen einsetzbar. So werden in beispielhafter Ausgestaltung basierend auf jedem der Datensätze D1 bis D20 je hundert als Auslösezusammenhang 30A, 30B, 30C, 30D, 30E, 30F bzw. 30G verwendbare neuronale Netze trainiert, so dass für den Auslösezusammenhang 30A hundert neuronale Netze und damit hundert Varianten des Auslösezusammenhanges 30A, für den Auslösezusammenhang 30B hundert neuronale Netze und damit hundert Varianten des Auslösezusammenhanges 30B, für den Auslösezusammenhang 30C hundert neuronale Netze und damit hundert Varianten des Auslösezusammenhanges 30C, für den Auslösezusammenhang 30D dreihundert neuronale Netze und damit dreihundert Varianten des Auslösezusammenhanges 30D, für den Auslösezusammenhang 30E zweihundert neuronale Netze und damit zweihundert Varianten des Auslösezusammenhanges 30E, für den Auslösezusammenhang 30F zweihundert neuronale Netze und damit zweihundert Varianten des Auslösezusammenhanges 30F und für den Auslösezusammenhang 30G zweihundert neuronale Netze und damit zweihundert Varianten des Auslösezusammenhanges 30G generiert werden.

In vorgenannter Ausgestaltung wird mittels des Bewerters 101 die Abweichungszahl E z.B. gemäß

$$E = \frac{1}{i2 - i1} \sum_{i=i1}^{i2} \left| CRASHTRUE - \frac{1}{L} \sum_{x=1}^{L} CRASH_x \right|$$

oder gemäß

$$E = \frac{1}{L(i2 - i1)} \sum_{i=i1}^{i2} \sum_{x=1}^{L} \left| CRASHTRUE - CRASH_x \right|$$

oder gemäß

$$E = \frac{1}{i2 - i1} \sum_{i=i1}^{i2} \left( CRASHTRUE - \frac{1}{L} \sum_{x=1}^{L} CRASH_x \right)^2$$

oder gemäß

$$E = \frac{1}{L(i2 - i1)} \sum_{i=i1}^{i2} \sum_{x=1}^{L} \left( CRASHTRUE - CRASH_x \right)^2$$

erzeugt, wobei L die Anzahl der Varianten eines Auslösezusammenhanges 30A, 30B, 30C, 30D, 30E, 30F bzw. 30G und x der Index für einzelne Varianten eines Auslösezusammenhanges 30A, 30B, 30C, 30D, 30E, 30F und 30G ist. Somit gilt L=100 für die Auslösezusammenhänge 30A, 30B und 30C, L=300 für den Auslösezusammenhang 30D und L=200 für die Auslösezusammenhänge 30E, 30F und 30G.

Die Abweichungszahl E kann z.B. auch beim Trainieren eines neuronalen Netzes aus dem in dem Handbuch der "Neural Network Toolbox" des Programms "MATLAB 7" von Mathworks in den Kapiteln "Perceptron Learning Rule (learnp)", Seiten 3-13 bis 3-15 und "Training (train)", Seiten 3-16 bis 3-20 mit dem als error e bezeichneten Trainingsfehler ermittelt werden.

In vorteilhafter Ausgestaltung der Erfindung werden die Abweichu ngszahlen $E_{30A}$, $E_{30B}$, $E_{30C}$, $E_{30D}$, $E_{30E}$, $E_{30F}$ und $E_{30G}$ für die Auslösezusammenhänge 30A, 30B, 30C, 30D, 30E, 30F und 30G in Abhängigkeit von Zündvorschlägen $CRASH_{30A}$, $CRASH_{30B}$, $CRASH_{30C}$, $CRASH_{30D}$, $CRASH_{30E}$, $CRASH_{30F}$ bzw. $CRASH_{30G}$ ermittelt, die auf Bewegungsgrößen zurückgehen, die nicht zur Generierung des jeweiligen Auslösezusammenhanges 30A, 30B, 30C, 30D, 30E, 30F und 30G verwendet worden sind. So wird die Abweichungszahl $E_{30A}$ in Abhängigkeit des Soll-Zündsignals CRASHTRUE des Datensatzes D2 und eines mittels des Auslösezusammenhanges 30A in Abhängigkeit der Pseudogeschwindigkeitswerte v0S1, v1S1, v2S1, v3S1, v0S2, v0S3 des Datensatzes D2 ermittelten Zündvorschlages $CRASH_{30A}$ ermittelt. Entsprechend wird die Abweichungszahl $E_{30B}$ in Abhängigkeit des Soll-Zündsignals CRASHTRUE der Datensätze D4 und D5 und eines mittels des Auslösezusammenhanges 30B in Abhängigkeit der Pseudogeschwindigkeitswerte v0S1, v1S1, v2S1, v3S1, v0S2, v0S3 der Datensätze D4 und D5 ermittelten Zündvorschlages $CRASH_{30B}$ ermittelt.

Die Abweichungszahl $E_{30C}$ wird in Abhängigkeit des Soll-Zündsignals CRASHTRUE des Datensatzes D7 und eines mittels des Auslösezusammenhanges 30C in Abhängigkeit der Pseudogeschwindigkeitswerte v0S1, v1S1, v2S1, v3S1, v0S2, v0S3 des Datensatzes D7 ermittelten Zündvorschlages $CRASH_{30C}$ ermittelt. Die Abweichungszahl $E_{30D}$

wird in Abhängigkeit des Soll-Zündsignals CRASHTRUE des Datensatzes D11 und eines mittels des Auslösezusammenhanges 30D in Abhängigkeit der Pseudogeschwindigkeitswerte v0S1, v1SI, v2S1, v3S1, v0S2, v0S3 des Datensatzes D11 ermittelten Zündvorschlages CFZASH$_{30D}$ ermittelt. Die Abweichungszahl E$_{30E}$ wird in Abhängigkeit des Soll-Zündsignals CRASHTRUE des Datensatzes D14 und eines mittels des Auslösezusammenhanges 30E in Abhängigkeit der Pseudogeschwindigkeitswerte v0S1, v1S1, v2S1, v3S1, v0S2, v0S3 des Datensatzes D14 ermittelten Zündvorschlages CRASH$_{30E}$ ermittelt. Die Abweichungszahl E$_{30F}$ wird in Abhängigkeit des Soll-Zündsignals CRASHTRUE des Datensatzes D17 und eines mittels des Auslösezusammenhanges 30F in Abhängigkeit der Pseudogeschwindigkeitswerte v0S1, v1S1, v2S1, v3S1, v0S2, v0S3 des Datensatzes D17 ermittelten Zündvorschlages CRASH$_{30F}$ ermittelt. Die Abweichungszahl E$_{30G}$ wird in Abhängigkeit des Soll-Zündsignals CRASHTRUE des Datensatzes D20 und eines mittels des Auslösezusammenhanges 30G in Abhängigkeit der Pseudogeschwindigkeitswerte v0S1, v1S1, v2S1, v3S1, v0S2, v0S3 des Datensatzes D20 ermittelten Zündvorschlages CRASH$_{30G}$ ermittelt.

Dem Schritt 92 folgt ein Schritt 93, in dem der Crashsensor und der entsprechende Auslösezusammenhang 30A, 30B, 30C, 30D, 30E, 30F bzw. 30G zum Einbau in das bzw. zur Implementierung in dem Kraftfahrzeug 1 ausgewählt wird, für den die kleinste Abweichungszahl E$_{30A}$, E$_{30B}$, E$_{30C}$, E$_{30D}$, E$_{30E}$, E$_{30F}$ und E$_{30G}$ erzielt worden ist. Ist z. B. die Abweichungszahl E$_{30B}$ die kleinste der Abweichungszahlen E$_{30A}$, E$_{30B}$, E$_{30C}$, E$_{30D}$, E$_{30E}$, E$_{30F}$ bzw. E$_{30G}$, so wird als Crashsensor S2 ein an der Position P1$_{S2}$ angeordneter Bosch PAS3 Beschleunigungssensor, als Crashsensor S3 ein an der Position P1$_{S3}$ angeordneter Bosch PAS3 Beschleunigungssensor und als Auslösezusammenhang 30 der Auslösezusammenhang 30B ausgewählt.

Dem Schritt 93 folgt ein Schritt 94, in dem der ausgewählte Auslösezusammenhang, also z.B. Auslösezusammenhang 30B, als Auslösezusammenhang 30 in dem Steuergerät 2 implementiert wird. Das Steuergerät 2, inklusive Crashsensor S1, wird anschließend zusammen mit den ausgewählten Crashsensoren S2 und S3 und entsprechenden Insassenschutzeinrichtungen, wie dem Airbag 15 bzw. dem Gurtstraffer 16, in dem Kraftfahrzeug 1 verbaut.

Obwohl in Verbindung mit einem binären Soll-Zündsignal CRASHTRUE und einem binären Zündvorschlag CRASH erläutert, ist die Erfindung in gleicher Weise auch für komplexe Soll-Zündsignale und Zündvorschläge anwendbar. Dies gilt sowohl für das unter Bezugnahme auf Fig. 11 und Fig. 12 beschriebene Vorgehen als auch für das unter Bezugnahme auf Fig. 13 und Fig. 14 beschriebene Vorgehen.

In dem vorgestellten bevorzugten Ausführungsbeispiel werden die Pseudogeschwindigkeitswerte v0S1, v1S1, v2S1, v3S1, v0S2, v0S3, also die zeitlichen Mittelwerte der (gemessenen) Beschleunigungswerte aS1, aS2, aS3, als Eingangs- und Trainingsgrößen der Auslösezusammenhänge 30A, 30B, 30C, 30D, 30E, 30F und 30G verwendet. Die (gemessenen) Beschleunigungswerte aS1, aS2, aS3 bzw. die abgetasteten Beschleunigungswerte as1, as2, as3 können in gleicher Weise wie die Pseudogeschwindigkeitswerte v0S1, v1S1, v2S1, v3S1, v0S2, v0S3 als unmittelbare und nicht nur mittelbare Eingangs- und Trainingsgrößen der Auslösezusammenhänge 30A, 30B, 30C, 30D, 30E, 30F und 30G verwendet werden. Dies gilt ebenfalls sowohl für das unter Bezugnahme auf Fig. 11 und Fig. 12 beschriebene Vorgehen als auch für das unter Bezugnahme auf Fig. 13 und Fig. 14 beschriebene Vorgehen. In entsprechender Abwandlung des unter Bezugnahme auf Fig. 1 und Fig. 12 beschriebenen Vorgehens werden dabei die (gemessenen) Beschleunigungswerte aS1, aS2, aS3 bzw. die abgetasteten Beschleunigungswerte as1, as2, as3 in dem Bereich des Trainingsunterdrückungs-Zeitintervalls $\tau_{hole}$ aus den Trainingsdaten der Auslösezusammenhänge 30A, 30B, 30C, 30D, 30E, 30F und 30G entfernt.

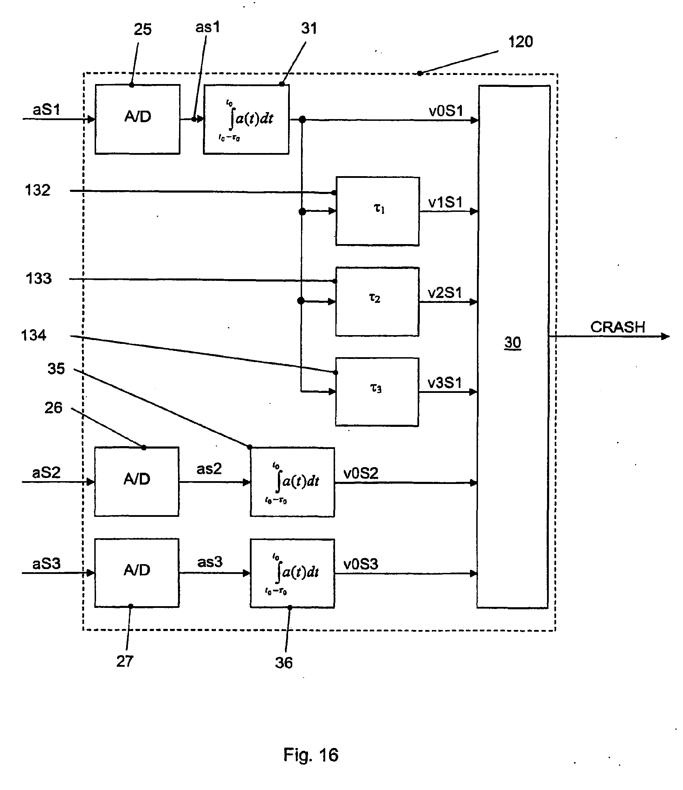

Fig. 16 zeigt ein zum Auslösemodul 20 alternatives Auslösemodul 120 in einer beispielhaften Ausgestaltung. Dabei sind die Integratoren 32, 33 und 34 durch Totzeitglieder 132, 133 und 134 ersetzt, die derart angeordnet sind, dass sich der Pseudogeschwindigkeitswert v1 S1 als um die Zeit $\tau_1$ verzögerter Pseudogeschwindigkeitswert v0S1, der Pseudogeschwindigkeitswert v2S1 als um die Zeit $\tau_2$ verzögerter Pseudogeschwindigkeitswert v0S1 und der Pseudogeschwindigkeitswert v3S1 als um die Zeit $\tau_3$ verzögerter Pseudogeschwindigkeitswert v0S1 ergibt.

Eine mögliche (einfache) Implementierung des Integrators 31 (und entsprechend angepasst für die Integratoren 32, 33 und 34) ist z.B.

$$vS1(i) = c \cdot \Delta t \sum_{j=i-\frac{\tau_0}{\Delta t}}^{i} as1(j)$$

wobei i ein Laufindex zur Angabe des aktuellen Zeitpunktes t$_0$ und eine Konstante ist. Die Pseudogeschwindigkeitswerte v0S1, v1S1, v2S1 und v3S1 ergeben sich in diesem Fall z.B: gemäß folgender Zusammenhänge:

$$v0S1 = vS1(i)$$

$$v1S1 = vS1(i - \frac{\tau_1}{\Delta t})$$

$$v2S1 = vS1(i - \frac{\tau_2}{\Delta t})$$

und

$$v3S1 = vS1(i - \frac{\tau_3}{\Delta t})$$

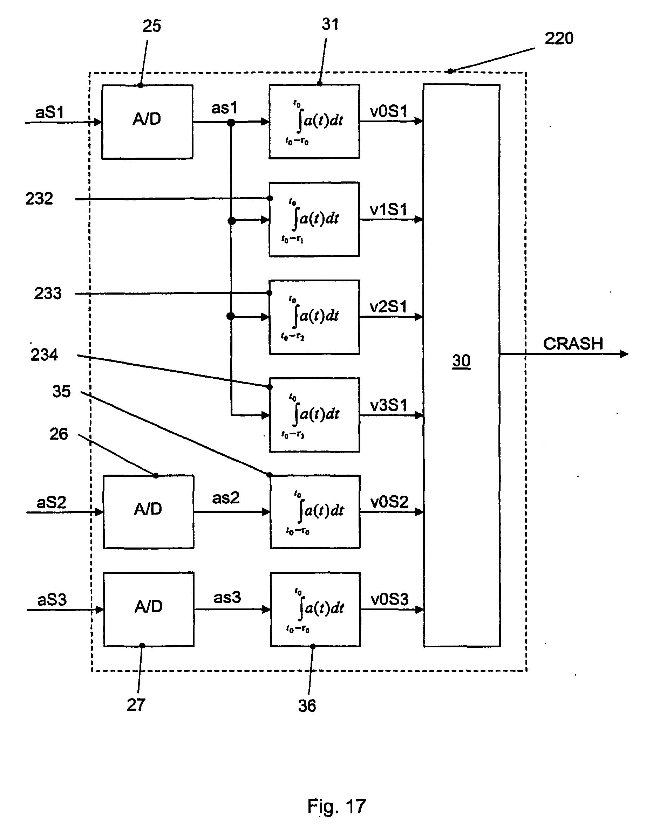

Fig. 17 zeigt ein zum Auslösemodul 20 alternatives Auslösemodul 220 in einer beispielhaften Ausgestaltung. Dabei sind die Integratoren 32, 33 und 34 durch Integratoren 232, 233 und 234 ersetzt. Dabei wird mittels des Integrators 232 der Pseudogeschwindigkeitswert v1S1gemäß

$$v1S1 = \int_{t_0 - \tau_1}^{t_0} as1 \cdot dt$$

ermittelt.

Mittels des Integrators 233 wird ein Pseudogeschwindigkeitswert v2S1 zu einem Zeitpunkt $t_0$ gemäß

$$v2S1 = \int_{t_0 - \tau_2}^{t_0} as1 \cdot dt$$

ermittelt.

Mittels des Integrators 234 wird ein Pseudogeschwindigkeitswert v3S1 zu einem Zeitpunkt $t_0$ gemäß

$$v3S1 = \int_{t_0 - \tau_3}^{t_0} as1 \cdot dt$$

ermittelt.

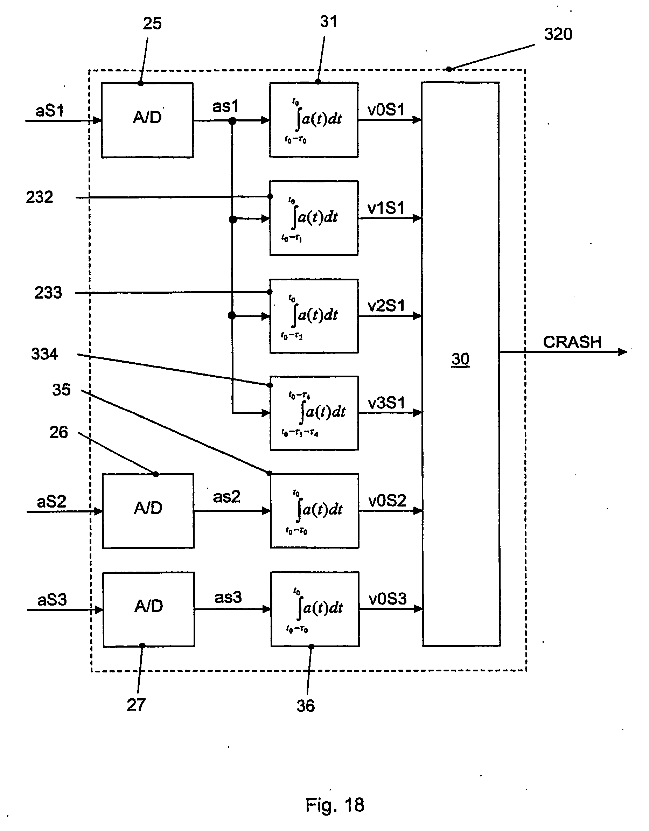

Bei dem Auslösemodul 20 gemäß Fig. 4 und dem Auslösemodul 120 gemäß Fig. 16 unterscheiden sich die Zeitintervalle in ihrer Position. Bei dem Auslösemodul 220 gemäß Fig. 17 unterscheiden sich die Zeitintervalle dagegen in ihrer Länge. Es kann auch vorgesehen werden, dass sich Zeitintervalle in ihrer Länge und in ihrer Position unterscheiden. Ein entsprechendes Ausführungsbeispiel zeigt Fig. 18. Fig. 18 zeigt ein zum Auslösemodu I 220 alternatives Auslösemodul 320 in einer beispielhaften Ausgestaltung. Dabei ist der Integrator 234 durch einen Integrator 334 ersetzt, mittels dessen ein Pseudogeschwindigkeitswert v3S1 zu einem Zeitpunkt $t_0$-$\tau_4$ gemäß

$$v3S1 = \int_{t_0 - \tau_3 - \tau_4}^{t_0 - \tau_4} as1 \cdot dt$$

ermittelt wird.

Die Erfindung führt zu einer besonders robusten Ansteuerung von Airbags und Gurtstraffern.

Obwohl in den Ausführungsbeispielen an Hand von Airbags und Gurtstraffern für einen Frontalzusammenstoß erläutert, soll die Erfindung selbstverständlich nicht auf diesen Fall beschränkt sein. Die Erfindung ist auch für Seitenairbags und andere Insassenschutzsysteme anwendbar. In einer Implementierung für Seitenairbags können die Crashsensoren S2 und S3 z.B. in der B-Säule angeordnet werden. Es kann vorgesehen werden, dass auch für Crashsensor S2 und/oder Crashsensor S3 zumindest ein Pseudogeschwindigkeitswert über zumindest einem weiteren Zeitintervall gebildet wird.

Das Steuergerät 2 kann auch ein verteiltes System sein. Ein Steuergerät im Sinne der Erfindung muss nicht in einem einzigen Gehäuse untergebracht sein. Ein Steuergerät im Sinne der Erfindung kann auch ein einzelner Chip oder eine Platine sein.

Soweit Entscheidungsbäume im Zusammenhang mit der Erzeugung des Zündvorschlags CRASH genannt bzw. erwähnt sind, können diese auch durch Regression Trees, Association Tables, Rule Sets, Supervector Mashines oder andere Mashine-Learning-Verfahren ersetzt werden.

Anstelle der Bewegungsgrößen bzw. deren Mittelwerte können auch Differenzen von Bewegungsgrößen, Mittelwerte dieser Differenzen und/oder Differenzen von Mittelwerten verwendet werden. So kann z.B. vor den Integratoren 31, 32, 33, 34, 35, 36, 232, 233, 234 bzw. 334 in Fig. 4, Fig. 16, Fig. 17 und/oder Fig. 18 eine Differenzbildung vorgesehen werden, so dass anstelle der abgetasteten Beschleunigungswerte as1, as2, as3 Differenzwerte $\Delta$as1, $\Delta$as2, $\Delta$as3 Eingangsgrößen der Integratoren 31, 32, 33, 34, 35, 36, 232, 233, 234 bzw. 334 sind, wobei $\Delta$as1 gleich der Differenz as1-as2, $\Delta$as2 gleich der Differenz as1-as3 und $\Delta$as3 gleich der Differenz as2-as3 ist. Es kann zudem vorgesehen sein, dass der Differenzwert $\Delta$as1 in gleicher Weise verarbeitet wird wie der abgetastete Beschleunigungswert as1 in Fig. 4, Fig. 16, Fig. 17 und/oder Fig. 18, dass der Differenzwert $\Delta$as2 in gleicher Weise verarbeitet wird wie der abgetastete Beschleunigungswert as1 in Fig. 4, Fig. 16, Fig. 17 und/oder Fig. 18 und/oder dass der Differenzwert $\Delta$as3 in gleicher Weise verarbeitet wird wie der abgetastete Beschleunigungswert as2 in Fig. 4, Fig. 16, Fig. 17 und/oder Fig. 18. In diesem Fall sind die Anzahl der Integratoren und die Anzahl der Eingangsgrößen dem Auslösezusammenhang 30 entsprechend anzupassen.

Differenzen können auch zeitliche Differenzen sein. So kann vorgesehen sein, anstelle der abgetasteten Beschleunigungswerte as1, as2, as3 Differenzwerte $\Delta$as1, $\Delta$as2, $\Delta$as3 als Eingangsgrößen der Integratoren 31, 32, 33, 34, 35, 36, 232, 233, 234 bzw. 334 zu verwenden, wobei $\Delta$as1(t) gleich der Differenz as1(t)-as1(t-$\tau$), $\Delta$as2 gleich der Differenz as2(t)-as2(t-$\tau$) oder der Differenz as2(t)-as3(t-$\tau$) und $\Delta$as3 gleich der Differenz as3(t)-as3(t-$\tau$) oder der Differenz as3(t)-as2(t-$\tau$) ist.

Entsprechend vorgenannten Ausführungen in Bezug auf eine Differenzbildung können Bewegungsgrößen im Sinne der Erfindung auch Differenzen von Bewegungsgrößen sein, wenn sie als Eingangsgrößen verwendet werden.

Analog kann mit den Pseudogeschwindigkeitswerten v0S1, v1S1, v2S1, v3S1, v0S2, v0S3 verfahren werden. Entsprechend können Mittelwerte von Bewegungsgrößen im Sinne der Erfindung auch Differenzen von Mittelwerten von Bewegungsgrößen bzw. Mittelwerte von Differenzen von Bewegungsgrößen sein, wenn sie als Eingangsgrößen verwendet werden.


**Bezugszeichenliste**

| | |
|---|---|
| 1 | Kraftfahrzeug |
| 2 | Steuergerät |
| 5, 6 | Zuleitungen |
| 10 | Steuerungsmodul |
| 11 | Gurtsensor |
| 12 | Sitzbelegungssensor |
| 14 | Bedienelement |
| 15 | Airbag |
| 16 | Gurtstraffer |
| 20, 120, 220, 320 | Auslösemodul |
| 21 | Feuertabelle |
| 25, 26, 27 | A/D-Wandler |
| 30, 30A, 30B, 30C, 30D, 30E, 30F, 30G | Auslösezusammenhang |
| 31, 32, 33, 34, 35, 36, 232, 233, 234, 334 | Integrator |
| 40 | Zeitintervall |
| 50, 51, 52, 53, 54, 55 | Eingangsknoten |

| 60, 61, 62, 63, 64, 65 | verdeckter Knoten |
| 70 | Ausgangsknoten |
| 80 | Entscheidungsbaum |
| 81, 82, 83, 84, 85, 86, 87, 88, 89, 92 | Abfrage |
| 90, 91, 92, 93, 94 | Schritt |
| 100 | Datenbasis |
| 101 | Bewerter |
| 132, 133, 134 | Totzeitglied |

| AIR, GURT | Zündsignal |
| $aS1, aS2, aS3, as1, as2, as3$ | Beschleunigungswert |
| $CRASH, CRASH_{30A}, CRASH_{30B}, CRASH_{30C}, CRASH_{30D}, CRASH_{30E}, CRASH_{30F}\ CRASH_{30G}$ | Zündvorschlag |
| CRASHTRUE | Soll-Zündsignal |
| $E_{30A}, E_{30B}, E_{30C}, E_{30D}, E_{30E}, E_{30F}, E_{30G}$ | Abweichungszahl |
| EINAUS | Schaltsignal |
| $P2_{S2}, P2_{S3}, P3_{S2}, P3_{S3}, P4_{S2}$ | Position |
| MGURT | Gurtinformation |
| MSITZ | Sitzbelegungsinformation |
| $S1, S2, S3$ | Crashsensor |
| $t$ | Zeit |
| $t_0$ | aktueller Zeitpunkt |
| $t_z$ | Soll-Auslösezeitpunkt |
| $v0S1, v1S1, v2S1, v3S1, v0S2, v0S3$ | Pseudogeschwindigkeitswert |
| $\tau_0$ | Länge eines Zeitintervalls |
| $\tau_0, \tau_1, \tau_2, \tau_3$ | Länge eines Zeitintervalls oder Zeit(-verzögerung) |
| $\tau_{hole}$ | Trainingsunterdrükkungs-Zeitintervall |

## Patentansprüche

**1.** Verfahren zum Herstellen eines Kraftfahrzeuges (1), wobei ein erster Auslösezusammenhang (30A) zur Erzeugung eines ersten, von einer mittels eines ersten Crashsensors messbaren Bewegungsgröße (aS1) abhängigen und zur Ansteuerung einer Insassenschutzeinrichtung (15, 16) geeigneten, Zündsignals (CRASH30A) in Abhängigkeit

- eines Soll Zündsignals (CRASHTRUE) zur Ansteuerung der Insassenschutzeinrichtung (15, 16) und
- einer mittels des ersten Crashsensors in einer Situation mit bekanntem Soll Zündsignal (CRASHTRUE) gemessenen Bewegungsgröße (aS1)

generiert wird, **dadurch gekennzeichnet, dass** zumindest ein zweiter Auslösezusammenhang (30B) zur Erzeugung eines zweiten, von einer mittels eines zweiten, von dem ersten Crashsensor verschiedenen, Crashsensors messbaren Bewegungsgröße (aS2) abhängigen und zur Ansteuerung der Insassenschutzeinrichtung (15, 16) geeigneten, Zündsignals (CRASH30B) in Abhängigkeit

- des Soll Zündsignals (CRASHTRUE) und
- einer mittels des zweiten Crashsensors in der oder einer weiteren Situation mit bekanntem Soll Zündsignal (CRASHTRUE) gemessenen Bewegungsgröße (aS2)

generiert wird.

**2.** Verfahren nach Anspruch 1, **dadurch gekennzeichnet, dass** der erste Crashsensor oder der zweite Crashsensor in Abhängigkeit des ersten Zündsignals (CRASH30A), des zweiten Zündsignals (CRASH30B) oder des Soll Zündsignals (CRASHTRUE) zum Einbau in das Kraftfahrzeug (1) ausgewählt wird.

**3.** Verfahren nach Anspruch 2, **dadurch gekennzeichnet, dass** der erste Crashsensor oder der zweite Crashsensor in Abhängigkeit des ersten Zündsignals (CRASH30A), des zweiten Zündsignals (CRASH30B) und des Soll Zündsignals (CRASHTRUE) zum Einbau in das Kraftfahrzeug (1) ausgewählt wird.

**4.** Verfahren nach Anspruch 1, 2 oder 3, **dadurch gekennzeichnet, dass** der erste Crashsensor oder der zweite Crashsensor in Abhängigkeit einer Abweichung des ersten Zündsignals (CRASH30A) von dem Soll Zündsignal (CRASHTRUE) oder einer Abweichung des zweiten Zündsignals (CRASH30B) von dem Soll Zündsignal (CRASHTRUE) zum Einbau in das Kraftfahrzeug (1) ausgewählt wird.

**5.** Verfahren nach einem der Ansprüche 2 bis 4, **dadurch gekennzeichnet, dass** die Auswahl zwischen dem ersten Crashsensor und dem zweiten Crashsensor zum Einbau in das Kraftfahrzeug (1)

- in Abhängigkeit eines mittels des ersten Auslösezusammenhanges (30A) in Abhängigkeit einer mittels des ersten Crashsensors gemessenen Bewegungsgröße (aS1) ermittelten ersten Zündsignals (CRASH30A), die nicht zur Generierung des ersten Auslösezusammenhanges (30A) verwendet worden ist, oder
- in Abhängigkeit eines mittels des zweiten Auslösezusamnienhanges (30B) in Abhängigkeit einer mittels des zweiten Crashsensors gemessenen Bewegungsgröße (aS2) ermittelten zweiten Zündsignals (CRASH30B), die nicht zur Generierung des zweiten Auslösezusammenhanges (30B) verwendet worden ist,

erfolgt.

**6.** Verfahren nach einem der vorhergehenden Ansprüche, **dadurch gekennzeichnet, dass** zumindest zwei erste Auslösezusammenhänge (30A) in Abhängigkeit

- des Soll Zündsignals (CRASHTRUE) und
- der mittels des ersten Crashsensors in der Situation mit bekanntem Soll Zündsignal (CRASHTRUE) gemessenen Bewegungsgröße (aS1)

generiert werden oder dass zumindest zwei zweite Auslösezusammenhänge (30B) in Abhängigkeit

- des Soll Zündsignals (CRASHTRUE) und
- der mittels des zweiten Crashsensors in der Situation mit bekanntem Soll Zündsignal (CRASHTRUE) gemessenen Bewegungsgröße (aS2)

generiert werden.

**7.** Verfahren nach einem der vorhergehenden Ansprüche, **dadurch gekennzeichnet, dass** zumindest zehn erste Auslösezusammenhänge (30A) in Abhängigkeit

- des Soll Zündsignals (CRASHTRUE) und
- der mittels des ersten Crashsensors in der Situation mit bekanntem Soll Zündsignal (CRASHTRUE) gemessenen Bewegungsgröße (aS1)

generiert werden oder dass zumindest zehn zweite Auslösezusammenhänge (30B) in Abhängigkeit

- des Soll Zündsignals (CRASHTRUE) und
- der mittels des zweiten Crashsensors in der Situation mit bekanntem Soll Zündsignal (CRASHTRUE) gemessenen Bewegungsgröße (aS2)

generiert werden.

**8.** Verfahren nach einem der Ansprüche 2 bis 7, **dadurch gekennzeichnet, dass** die Insassenschutzeinrichtung (15, 16) und der ausgewählte Crashsensor in das Kraftfahrzeug (1) eingebaut werden.

**9.** Verfahren nach einem der Ansprüche 2 bis 8, **dadurch gekennzeichnet, dass** der dem ausgewählten Crashsensor zugeordnete Auslösezusammenhang (30B) in dem Kraftfahrzeug (1) implementiert wird.

**Claims**

**1.** Method for producing a motor vehicle (1), wherein a first triggering context (30A) for generating a first ignition signal (CRASH$_{30A}$) which is dependent on a movement variable (aS1) which can be measured by means of a first crash sensor, and is suitable for actuating a vehicle occupant protection device (15, 16), is generated as a function

- of a set point ignition signal (CRASHTRUE) for actuating the vehicle occupant protection device (15, 16) and
- of a movement variable (aS1) which is measured by means of the first crash sensor in a situation with a known set point ignition signal (CRASHTRUE),

**characterized in that** at least one second triggering context (30B) for generating a second ignition signal ($CRASH_{30B}$) which is dependent on a movement variable (aS2) which can be measured by means of a second crash sensor which is different from the first crash sensor, and is suitable for actuating the vehicle occupant protection device (15, 16), is generated as a function

- of the set point ignition signal (CRASHTRUE) and
- of a movement variable (aS2) which is measured by means of the second crash sensor in the situation or in a further situation with a known set point ignition signal (CRASHTRUE).

2. Method according to Claim 1, **characterized in that** the first crash sensor or the second crash sensor is selected for installation in the motor vehicle (1) as a function of the first ignition signal ($CRASH_{30A}$), of the second ignition signal ($CRASH_{30B}$) or of the set point ignition signal (CRASHTRUE).

3. Method according to Claim 2, **characterized in that** the first crash sensor or the second crash sensor is selected for installation in the motor vehicle (1) as a function of the first ignition signal ($CRASH_{30A}$), of the second ignition signal ($CRASH_{30B}$) and of the set point ignition signal (CRASHTRUE).

4. Method according to Claim 1, 2 or 3, **characterized in that** the first crash sensor or the second crash sensor is selected for installation in the motor vehicle (1) as a function of a deviation of the first ignition signal ($CRASH_{30A}$) from the set point ignition signal (CRASHTRUE) or of a deviation of the second ignition signal ($CRASH_{30B}$) from the set point ignition signal (CRASHTRUE).

5. Method according to one of Claims 2 to 4, **characterized in that** the selection between the first crash sensor and the second crash sensor for installation in the motor vehicle (1) is carried out

- as a function of a first ignition signal ($CRASH_{30A}$) which is determined by means of the first triggering context (30A) as a function of a movement variable (aS1) which is measured by means of the first crash sensor, and which has not been used to generate the first triggering context (30A), or
- as a function of a second ignition signal ($CRASH_{30B}$) which is determined by means of the second triggering context (30B) as a function of a movement variable (aS2) which is measured by means of the second crash sensor, and which has not been used to generate the second triggering context (30B).

6. Method according to one of the preceding claims, **characterized in that** at least two first triggering contexts (30A) are generated as a function

- of the set point ignition signal (CRASHTRUE) and
- of the movement variable (aS1) which is measured by means of the first crash sensor in the situation with a known set point ignition signal (CRASHTRUE),

or **in that** at least two second triggering contexts (30B) are generated as a function

- of the set point ignition signal (CRASHTRUE) and
- of the movement variable (aS2) which is measured by means of the second crash sensor in the situation with a known set point ignition signal (CRASHTRUE).

7. Method according to one of the preceding claims, **characterized in that** at least ten first triggering contexts (30A) are generated as a function

- of the set point ignition signal (CRASHTRUE) and
- of the movement variable (aS1) which is measured by means of the first crash sensor in the situation with a known set point ignition signal (CRASHTRUE),

or **in that** at least ten second triggering contexts (30B) are generated as a function

- of the set point ignition signal (CRASHTRUE) and
- of the movement variable (aS2) which is measured by means of the second crash sensor in the situation with a known set point ignition signal (CRASHTRUE).

**8.** Method according to one of Claims 2 to 7, **characterized in that** the vehicle occupant protection device (15, 16) and the selected crash sensor are installed in the motor vehicle (1).

**9.** Method according to one of Claims 2 to 8, **characterized in that** the triggering context (30B) which is assigned to the selected crash sensor is implemented in the motor vehicle (1).

**Revendications**

**1.** Procédé pour fabriquer un véhicule automobile (1), une première relation de déclenchement (30A) destinée à générer un premier signal d'amorçage ($CRASH_{30A}$) en fonction d'une grandeur de déplacement (aS1) mesurable au moyen d'un premier détecteur de collision et conçu pour commander un dispositif de protection des passagers (15, 16) étant générée en fonction d'un signal d'amorçage de consigne (CRASHTRUE) destiné à commander le dispositif de protection des passagers (15, 16) et d'une grandeur de déplacement (aS1) mesurée au moyen du premier détecteur de collision dans une situation où le signal d'amorçage de consigne (CRASHTRUE) est connu, **caractérisé en ce qu'**au moins une deuxième relation de déclenchement (30B) destinée à générer un deuxième signal d'amorçage ($CRASH_{30B}$) en fonction d'une grandeur de déplacement (aS2) mesurable au moyen d'un deuxième détecteur de collision, différent du premier détecteur de collision, et conçu pour commander le dispositif de protection des passagers (15, 16) est générée en fonction du signal d'amorçage de consigne (CRASHTRUE) et d'une grandeur de déplacement (aS2) mesurée au moyen du deuxième détecteur de collision dans la situation ou dans une autre situation où le signal d'amorçage de consigne (CRASHTRUE) est connu.

**2.** Procédé selon la revendication 1, **caractérisé en ce que** le premier détecteur de collision ou le deuxième détecteur de collision est sélectionné en fonction du premier signal d'amorçage ($CRASH_{30A}$), du deuxième signal d'amorçage ($CRASH_{30B}$) ou du signal d'amorçage de consigne (CRASHTRUE) en vue de son montage dans le véhicule automobile (1).

**3.** Procédé selon la revendication 2, **caractérisé en ce que** le premier détecteur de collision ou le deuxième détecteur de collision est sélectionné en fonction du premier signal d'amorçage ($CRASH_{30A}$), du deuxième signal d'amorçage ($CRASH_{30B}$) et du signal d'amorçage de consigne (CRASHTRUE) en vue de son montage dans le véhicule automobile (1).

**4.** Procédé selon la revendication 1, 2 ou 3, **caractérisé en ce que** le premier détecteur de collision ou le deuxième détecteur de collision est sélectionné en fonction d'un écart entre le premier signal d'amorçage ($CRASH_{30A}$) et le signal d'amorçage de consigne (CRASHTRUE) ou d'un écart entre le deuxième signal d'amorçage ($CRASH_{30B}$) et le signal d'amorçage de consigne. (CRASHTRUE) en vue de son montage dans le véhicule automobile (1).

**5.** Procédé selon l'une des revendications 2 à 4, **caractérisé en ce que** la sélection entre le premier détecteur de collision et le deuxième détecteur de collision en vue de son montage dans le véhicule automobile (1) s'effectue en fonction d'un premier signal d'amorçage ($CRASH_{30A}$), déterminé au moyen de la première relation de déclenchement (30A) en fonction d'une grandeur de déplacement (aS1) mesurée au moyen du premier détecteur de collision, lequel signal n'a pas été utilisé pour générer la première relation de déclenchement (30A), ou en fonction d'un deuxième signal d'amorçage ($CRASH_{30B}$), déterminé au moyen de la deuxième relation de déclenchement (30B) en fonction d'une grandeur de déplacement (aS2) mesurée au moyen du deuxième détecteur de collision, lequel signal n'a pas été utilisé pour générer la deuxième relation de déclenchement (30B).

**6.** Procédé selon l'une des revendications précédentes, **caractérisé en ce qu'**au moins deux premières relations de déclenchement (30A) sont générées en fonction du signal d'amorçage de consigne (CRASHTRUE) et de la grandeur de déplacement (aS1) mesurée au moyen du premier détecteur de collision dans la situation où le signal d'amorçage de consigne (CRASHTRUE) est connu ou qu'au moins deux deuxièmes relations de déclenchement (30B) sont générées en fonction du signal d'amorçage de consigne (CRASHTRUE) et de la grandeur de déplacement (aS2) mesurée au moyen du deuxième détecteur de collision dans la situation où le signal d'amorçage de consigne (CRASHTRUE) est connu.

7. Procédé selon l'une des revendications précédentes, **caractérisé en ce qu'**au moins dix premières relations de déclenchement (30A) sont générées en fonction du signal d'amorçage de consigne (CRASHTRUE) et de la grandeur de déplacement (aS1) mesurée au moyen du premier détecteur de collision dans la situation où le signal d'amorçage de consigne (CRASHTRUE) est connu ou qu'au moins dix deuxièmes relations de déclenchement (30B) sont générées en fonction du signal d'amorçage de consigne (CRASHTRUE) et de la grandeur de déplacement (aS2) mesurée au moyen du deuxième détecteur de collision dans la situation où le signal d'amorçage de consigne (CRASHTRUE) est connu.

8. Procédé selon l'une des revendications 2 à 7, **caractérisé en ce que** le dispositif de protection des passagers (15, 16) et le détecteur de collision sélectionné sont montés dans le véhicule automobile (1).

9. Procédé selon l'une des revendications 2 à 8, **caractérisé en ce que** la relation de déclenchement (30B) associée au détecteur de collision sélectionné est mise en oeuvre dans le véhicule automobile (1).

P3$_{S2}$     S2     P2$_{S2}$     5     2     1

P4$_{S2}$

P3$_{S3}$     S3     P2$_{S3}$

6

Fig. 1

| S2 | aS2 | → |
| S3 | aS3 | → |

S1   aS1

10

AIR → 15

11   MGURT →

12   MSITZ →

14   EINAUS →

GURT → 16

2

Fig. 2

10

aS3 →

aS2 → | 20 | CRASH → | 21 | AIR →

aS3 →

MGURT →

MSITZ →

EINAUS →

GURT →

Fig. 3

Fig. 4

Fig. 5

$$\int_{t-\tau_0}^{t} as1 \cdot dt \left[\frac{m}{s}\right]$$

Fig. 6

23

**Fig. 7**

Fig. 8

```
┌──────────────┐
│      90      │
└──────────────┘
       │
       ▼
┌──────────────┐
│      91      │
└──────────────┘
       │
       ▼
┌──────────────┐
│      92      │
└──────────────┘
       │
       ▼
┌──────────────┐
│      93      │
└──────────────┘
       │
       ▼
┌──────────────┐
│      94      │
└──────────────┘
```

Fig. 9

$$\int_{t-r_0}^{t} asl \cdot dt \left[\frac{m}{s}\right]$$

Fig. 10

$$\int\limits_{t-\tau_0}^{t} as1 \cdot dt \left[ \frac{m}{s} \right]$$

$\tau_{hole}$

0,2

0,1

0

0          0,02          $t_z$          0,04

t [s]

Fig. 11

CRASHTRUE

$\tau_{hole}$

1

0

0          0,02          $t_z$          0,04

t [s]

Fig. 12

$$\int_{t-\tau_0}^{t} asl \cdot dt \left[\frac{m}{s}\right]$$

Fig. 13

CRASHTRUE

,egal'

Fig. 14

100

v0S1

v1S1

v2S1

v3S1

v0S2

v0S3

30A, 30B, 30C, 30D,
30E, 30F, 30G

$CRASH_{30A}$, $CRASH_{30B}$, $CRASH_{30C}$,
$CRASH_{30D}$, $CRASH_{30E}$, $CRASH_{30F}$,
$CRASH_{30G}$

CRASHTRUE

101

$E_{30A}$, $E_{30B}$, $E_{30C}$, $E_{30D}$, $E_{30E}$, $E_{30F}$, $E_{30G}$

Fig. 15

Fig. 16

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5583771 A
- US 5684701 A
- US 6532508 B1
- DE 19854380 A1
- DE 10035505 A1
- DE 10040111 A1
- DE 10103661 C1
- DE 10016142 A1